# EUROPEAN PATENT SPECIFICATION

(11) **EP 3 924 987 B1**
(45) Date of publication and mention of the grant of the patent: **06.05.2026**
(21) Application number: 19914918.8
(22) Date of filing: 15.02.2019
(51) Int. Cl.: H01F 38/14, H02J 50/12, H01F 27/00, H01F 27/28

(54) **WIRELESS POWER TRANSFER BASED ON MAGNETIC INDUCTION**
DRAHTLOSE STROMÜBERTRAGUNG AUF BASIS VON MAGNETISCHER INDUKTION
TRANSFERT D'ÉNERGIE SANS FIL BASÉ SUR L'INDUCTION MAGNÉTIQUE

(43) Date of publication of application: 22.12.2021
(73) Proprietor: Xnergy Autonomous Power Technologies Pte. Ltd., Singapore 637144 (SG)
(72) Inventor: NAWAWI, Arie, Singapore 637144 (SG); LIM, Ziyou, Singapore 637144 (SG)
(74) Representative: 2K Patent Partnerschaft mbB
(86) International application number: PCT/SG2019/050090
(87) International publication number: WO 2020/167245

(56) References cited:
- WO-A1-2017/195447
- WO-A1-2018/004130
- CN-A- 109 038 846
- JP-A- H1 132 452
- KR-A- 20070 007 237
- KR-A- 20130 072 284
- US-A1- 2013 119 779
- US-A1- 2015 054 350
- US-A1- 2015 255 987
- US-A1- 2015 280 448
- US-A1- 2017 092 420

## Description

### TECHNICAL FIELD

The present invention generally relates to wireless power transfer based on magnetic induction, and more particularly, a coupler for wireless power transfer and a method of manufacturing thereof, a wireless power transmitter including the coupler, a wireless power receiver including the coupler, a system for wireless power transfer including the wireless power transmitter and/or the wireless power receiver, and a method of wireless power transfer using the coupler.

### BACKGROUND

Wireless power transfer (WPT) based on magnetic induction (which may also be referred to as inductive power transfer (IPT)) has been widely used in charging or powering numerous applications, such as electronic devices, automatic guided vehicles, robots, electric transportations and so on, where safety and/or convenience are concerned. For example, in a WPT system for charging applications, the coil is the core element of the charging pad for both the primary side (transmitter) and the secondary side (receiver). Electrical power can be transferred wirelessly through the mutual magnetic coupling between the primary (transmitter) and secondary (receiver) coils in a similar working principle as a transformer. With electrical isolation capability, charging power can thus take place safely even in wet and dirty environments. Hence, the design/configuration of coils plays an important role as it affects the WPT system efficiency.

The magnetic coupling coefficients (k) of the primary and secondary coils in a WPT system may typically be less than 0.5 due to the relatively large air gap therebetween, while transformers may have magnetic coupling coefficients of over 0.95. WPT system varies in size and capacity, depending on the power transfer levels (e.g., between about 0.5 W to about 50 kW or even more) and the air gap between the primary and secondary coils (e.g., from about 1 mm to about 100 mm or even more depending on the applications).

The transferred power and the WPT system efficiency may be maximized in a practical manner when (i) the impedance matching condition is satisfied (e.g., when the output impedance matches with the load resistance) and (ii) the primary and secondary coils are axially aligned. For example, when the primary and secondary coils are axially misaligned and/or the distance between the primary and secondary coils is increased, the magnetic coupling coefficient *k* may decrease and affect the wireless power transfer efficiency.

A need therefore exists to provide a coupler and a method for wireless power transfer, that seek to overcome, or at least ameliorate, one or more of the deficiencies in conventional couplers and methods for wireless power transfer, such as but not limited to, improving wireless power transfer efficiency and/or reducing magnetic flux leakage. It is against this background that the present invention has been developed. US 2017/092420 and JP H11 32452 disclose couplers with one anti-directional coil section, several full loops per coil portion, and continuous winding.

### SUMMARY

According to a first aspect of the present invention, there is provided a coupler for wireless power transfer, as specified in **claim 1,** the coupler comprising:
a coil configured for wireless power transfer based on magnetic induction, the coil comprising a plurality of coil portions, the plurality of coil portions comprising a first coil portion and a second coil portion wound in opposite directions, wherein the first coil portion is nested within the second coil portion.

According to the invention, the first coil portion comprises one or more first loops and the second coil portion comprises one or more second loops wound in an opposite direction to the one or more first loops.

According to the invention, the first coil portion is wound in a clockwise direction and the second coil portion is wound in an anti-clockwise direction, or the second coil portion is wound in a clockwise direction and the first coil portion is wound in an anti-clockwise direction.

In various embodiments, the coil is configured to have a planar spiral configuration.

In various embodiments, the first coil portion and the second coil portion are each configured to have a unipolar coil configuration, and the coil has a multi-polar coil configuration.

According to the invention, the first coil portion and the second coil portion together form a first anti-directional coil section, and the coil further comprises one or more additional anti-directional coil sections, each additional anti-directional coil section comprising a third coil portion and a fourth coil portion wound in opposite directions, wherein the third coil portion is nested within the fourth coil portion.

According to the invention, the first anti-directional coil section is nested within the one or more additional anti-directional coil section.

According to the invention, the coil is configured as one continuous winding.

In various embodiments, the coil forms a first coil cell, and the coupler further comprises one or more additional coil cells connected to the first coil cell, each additional coil cell comprising a second coil configured for wireless power transfer based on magnetic induction, the second coil comprising a plurality of coil portions comprising a fifth coil portion and a sixth coil portion wound in opposite directions, wherein the fifth coil portion is nested within the sixth coil portion.

In various embodiments, the coupler further comprises a resonance capacitor connected to the coil in series or in parallel to form a resonance circuit configured for resonant inductive power transfer.

In various embodiments, the coupler is a transmitter coupler configured to receive a time-varying current from a power source connected thereto for generating a magnetic field to perform wireless power transfer with a receiver coupler over an air gap based on magnetic induction.

In various embodiments, the coupler is a receiver coupler configured to couple with a magnetic field generated from a transmitter coupler to induce a current in the receiver coupler for supplying power to an electrical load connected to the receiver couple to perform wireless power transfer with the transmitter coupler over an air gap based on magnetic induction.

According to a second aspect of the present invention, there is provided a wireless power transmitter comprising:
a power source configured to generate a time-varying current; and
a coupler according to the first aspect of the present invention functioning as a transmitter coupler and connected to the power source, wherein the transmitter coupler is configured to receive the time-varying current from the power source for generating a magnetic field to perform wireless power transfer with a receiver coupler over an air gap based on magnetic induction.

According to a third aspect of the present invention, there is provided a wireless power receiver comprising:
an electrical load; and
a coupler according to the first aspect of the present invention connected to the electrical load and functioning as a receiver coupler, wherein the receiver coupler is configured to couple with a magnetic field generated from a transmitter coupler to induce a current in the receiver coupler for supplying power to the electrical load connected to the receiver coupler to perform wireless power transfer with the transmitter coupler over an air gap based on magnetic induction.

According to a fourth aspect of the present invention, there is provided a system for wireless power transfer comprising:
a wireless power transmitter comprising:
   a power source configured to generate a time-varying current; and
   a transmitter coupler connected to the power source, wherein the transmitter coupler is configured to receive the time-varying current from the power source for generating a magnetic field to perform wireless power transfer with a receiver coupler over an air gap based on magnetic induction; and
a wireless power receiver comprising:
   an electrical load; and
   the receiver coupler connected to the electrical load, wherein the receiver coupler is configured to couple with the magnetic field generated from the transmitter coupler to induce a current in the receiver coupler for supplying power to the electrical load connected to the receiver coupler to perform wireless power transfer with the transmitter coupler over the air gap based on magnetic induction,
wherein at least one of the receiver coupler and the transmitter coupler is a coupler according to the first aspect of the present invention, and the wireless power transmitter and the wireless power receiver are separated by the air gap.

In various embodiments, the receiver coupler and the transmitter coupler are each a coupler according to the first aspect of the present invention.

In various embodiments, one of the receiver coupler and the transmitter coupler is a coupler according to the first aspect of the present invention, and the other of the receiver coupler and the transmitter coupler is a coupler configured to have a unipolar configuration.

According to a fifth aspect of the present invention, there is provided a method of manufacturing a coupler for wireless power transfer, as specified in **claim 7,** the method comprising:
configuring a coil for wireless power transfer based on magnetic induction, the coil comprising a plurality of coil portions, the plurality of coil portions comprising a first coil portion and a second coil portion wound in opposite directions, wherein the first coil portion is nested within the second coil portion.

According to the invention, the first coil portion comprises one or more first loops and the second coil portion comprises one or more second loops wound in an opposite direction to the one or more first loops.

According to the invention, the above-mentioned configuring a coil comprises winding the first coil portion in a clockwise direction and the second coil portion in an anti-clockwise direction, or winding the second coil portion in a clockwise direction and the first coil portion in an anti-clockwise direction.

In various embodiments, the coil is configured to have a planar spiral configuration.

In various embodiments, the first coil portion and the second coil portion are each configured to have a unipolar coil configuration, and the coil has a multi-polar coil configuration.

According to the invention, the first coil portion and the second coil portion together form a first anti-directional coil section, and said configuring the coil comprises configuring the coil to further comprise one or more additional anti-directional coil section, each additional anti-directional coil section comprising a third coil portion and a fourth coil portion wound in opposite directions, wherein the third coil portion is nested within the fourth coil portion.

According to the invention, the first set of anti-directional coil portions is nested within the one or more additional sets of anti-directional coil portions.

According to the invention, the coil is configured as one continuous winding.

In various embodiments, the coil forms a first coil cell, and the method further comprises configuring one or more additional coil cells connected to the first coil cell, each additional coil cell comprising a second coil configured for wireless power transfer based on magnetic induction, the second coil comprising a plurality of coil portions comprising a fifth coil portion and a sixth coil portion wound in opposite directions, wherein the fifth coil portion is nested within the sixth coil portion.

In various embodiments, the method further comprises providing a resonance capacitor connected to the coil in series or in parallel to form a resonance circuit configured for resonant inductive power transfer.

In various embodiments, the coupler is a transmitter coupler configured to receive a time-varying current from a power source connected thereto for generating a magnetic field to perform wireless power transfer with a receiver coupler over an air gap based on magnetic induction.

In various embodiments, the coupler is a receiver coupler configured to couple with a magnetic field generated from a transmitter coupler to induce a current in the receiver coupler for supplying power to an electrical load connected to the receiver couple to perform wireless power transfer with the transmitter coupler over an air gap based on magnetic induction.

According to a sixth aspect of the present invention, there is provided a method of wireless power according to **claim 11,** comprising:
generating, by a power source at a wireless power transmitter, a time-varying current; and
receiving, by a transmitter coupler at the wireless power transmitter connected to the power source, the time-varying current from the power source for generating a magnetic field to perform wireless power transfer with a receiver coupler over an air gap based on magnetic induction;
coupling, by the receiver coupler at a wireless power receiver connected to an electrical load, with a magnetic field generated from the transmitter coupler to induce a current in the receiver coupler to perform wireless power transfer with the transmitter coupler over the air gap based on magnetic induction; and
supplying, by the receiver coupler at the wireless power receiver, power to the electrical load connected thereto based on the current induced therein,
wherein at least one of the receiver coupler and the transmitter coupler is a coupler according to the first aspect of the present invention, and the wireless power transmitter and the wireless power receiver are separated by the air gap.

### BRIEF DESCRIPTION OF THE DRAWINGS

Embodiments of the present invention will be better understood and readily apparent to one of ordinary skill in the art from the following written description, by way of example only, and in conjunction with the drawings, in which:
FIGs. 1A to 1F depict schematic drawings of conventional unipolar couplers having various example configurations/shapes;
FIG. 2A depicts a schematic drawing of a conventional unipolar coupler along with an illustration of the magnetic field generated by the coupler;
FIG. 2B depicts a schematic drawing of a conventional bipolar coupler along with an illustration of the magnetic field generated by the coupler;
FIGs. 3A to 3C depict schematic drawings of example conventional bipolar couplers, namely, a conventional bipolar (BP) coupler (or BP pad), a conventional double D (DD) coupler (or DD pad) and a conventional DD coupler with additional quadrature coils (DDQ coupler or pad) 340, respectively;
FIG. 4 depicts a schematic drawing of a coupler for wireless power transfer according to various embodiments of the present invention;
FIG. 5 depicts a schematic drawing of a coupler for wireless power transfer comprising a coil including a plurality of anti-directional coil sections according to various embodiments of the present invention;
FIG. 6 depicts a schematic drawing of a coupler for wireless power transfer comprising a plurality of coil cells according to various embodiments of the present invention;
FIG. 7 depicts a system for wireless power transfer according to various embodiments of the present invention;
FIG. 8 depicts a flow diagram of a method of wireless power transfer according to various embodiments of the present invention;
FIG. 9 depicts a flow diagram of a method of manufacturing a coupler for wireless power transfer according to various embodiments of the present invention;
FIG. 10A depicts a schematic drawing of a coil according to various example embodiments of the present invention;
FIGs. 10B and 10C depict schematic drawings of the coil of FIG. 10A with an illustration of the magnetic flux generated by the coil;
FIGs. 10D and 10E depict schematic drawings of a first coil portion of the coil of FIG. 10A with an illustration of the magnetic field through a first area (represented by the shaded area in FIG. 10D) defined by the first coil portion;
FIGs. 10F and 10G depict schematic drawings of a second coil portion of the coil of FIG. 10A with an illustration of the magnetic field through a second area (represented by the shaded area in FIG. 10F) defined by the second coil portion;
FIG. 10H depicts a coil comprising a first coil portion and a second coil portion electrically connected to each other, whereby the first coil portion and the second coil portion each includes a plurality of loops (or turns), according to various example embodiments of the present invention;
FIGs. 11A and 11B depict schematic drawings of two example conventional unipolar coil configurations along with an illustration of the magnetic flux generated by the coils;
FIG. 11C depicts a schematic drawing of a conventional bipolar double D (DD) coil configuration along with an illustration of the magnetic flux generated by the coil;
FIG. 12A depicts a schematic drawing of a coil including a plurality of anti-directional coil sections according to various example embodiments of the present invention;
FIG. 12B depicts a schematic drawing of a coil including a plurality of coil cells connected in series according to various example embodiments of the present invention;
FIG. 12C depicts a schematic drawing of another coil including a plurality of coil cells connected in series according to various example embodiments of the present invention;
FIG. 12D depicts a schematic drawing of a coil including a plurality of coil cells connected in parallel according to various example embodiments of the present invention;
FIG. 13 depicts a schematic drawing of an example wireless power transfer system according to various example embodiments of the present invention;
FIGs. 14A to 14D depict schematic drawings of four exemplary combinations (Combinations I to IV) of primary and secondary coil configurations (coil topologies) which were evaluated in various experiments conducted according to various example embodiments of the present invention;
FIG. 15 shows a table (Table I) for magnetic leakage flux evaluation for Combinations I to IV having various coil dimensions/parameters (as shown in the table), whereby the air gap ("z") between the primary and secondary coils is 75 mm;
FIG. 16 shows a table (Table II) for magnetic leakage flux evaluation for Combinations I to IV having various coil dimensions/parameters (as shown in the table), whereby the magnetic leakage flux measurements were taken at an x-axis distance of 600 mm from the center of the coil for air gap ("z") of 50 mm and 100 mm between the primary and secondary coils; and
FIG. 17 shows a table (Table III) for coil misalignment evaluation for Combinations I to IV having various coil dimensions/parameters (as shown in the table), whereby the air gap ("z") between the primary and secondary coils is 75 mm.

### DETAILED DESCRIPTION

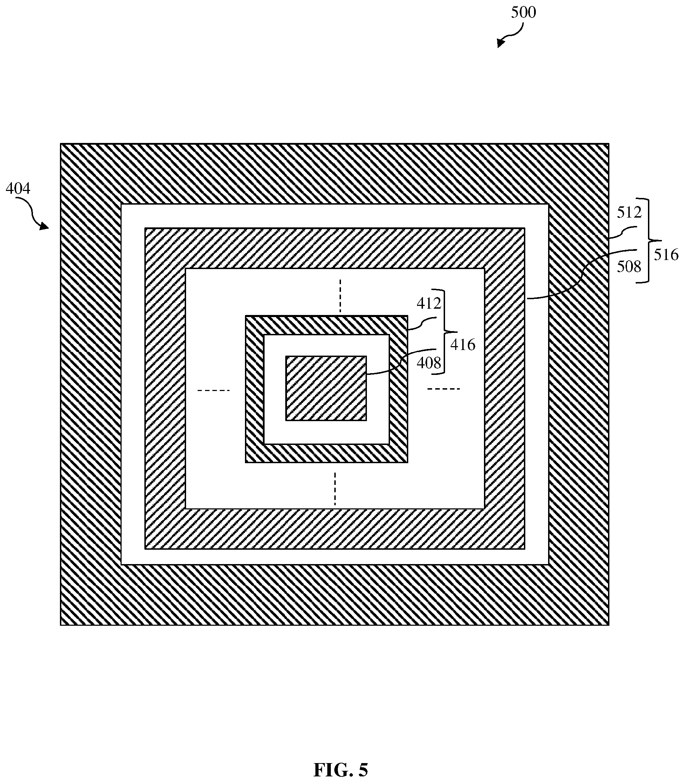

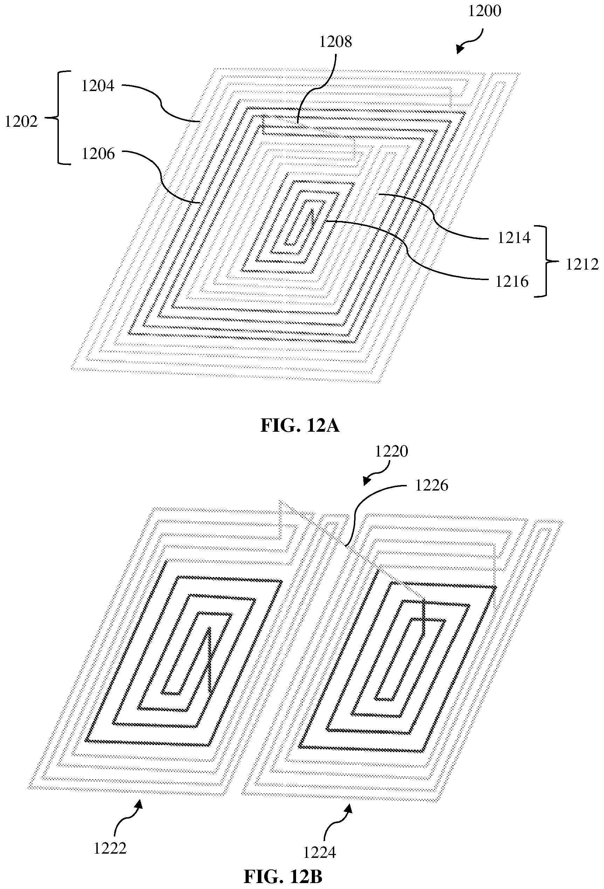

In the following, only embodiments comprising the nested at least two anti-directional coil sections are part of the **claimed** invention; they are depicted in FIG. 5+12A. Various embodiments of the present invention generally relate to wireless power transfer (WPT) based on magnetic induction (which may also be referred to as inductive power transfer (IPT)). In particular, various embodiments of the present invention provide a coupler for wireless power transfer (which may also be referred to as a wireless power transfer coupler) and a method of manufacturing thereof. Various embodiments of the present invention also provide a wireless power transmitter including the above-mentioned coupler (transmitter coupler), and a wireless power receiver including the above-mentioned coupler (receiver coupler). Various embodiments of the present invention also provide a system for wireless power transfer including the above-mentioned wireless power transmitter and/or the above-mentioned wireless power receiver, and a method or technique of wireless power transfer using the above-mentioned transmitter coupler and/or the above-mentioned receiver coupler.

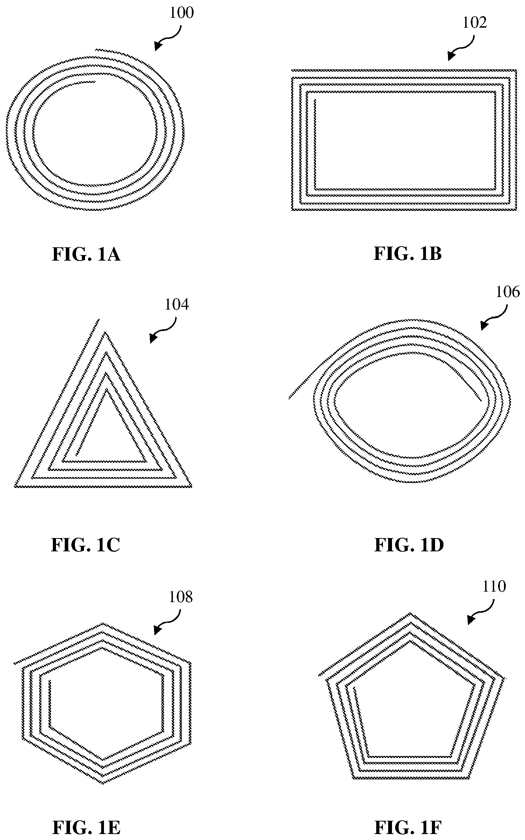

Conventionally, couplers (e.g., which may be coil(s) or may include coil(s)) may typically be configured/designed based on the magnetic core shapes and topologies (geometries), which may typically be pot cores, U-cores and E-cores. Hence, for example, circular shape/configuration of coils (or simply referred to as circular coils) 100, such as shown in FIG. 1A, have been well-researched and optimized, and have been popularly employed for WPT whereby the circular shape is fundamentally derived from pot cores. Although configuring coils to form circular couplers may be simple and easy, there exist various magnetic coupling limitations. For example, in an attempt to satisfy a desired magnetic coupling coefficient *k* (e.g., about 0.2), an increase in the air gap distance between the primary and secondary coils (e.g., a vertical height between a top primary coil and a bottom secondary coil) may require an accompanying increase in the diameter of the primary and secondary coils by four times proportionally to the increase in the air gap distance. As a result, such conventional circular couplers (e.g., charging pads) may be relatively bulky and may suffer from wireless power transfer inefficiencies, especially for applications with a larger air gap and/or higher power levels requirements. For example, in a WPT system for charging applications, such conventional circular couplers may face challenges in charging batteries within an acceptable or a desired time period.

Conventional couplers having a rectangular form/shape (or simply referred to as rectangular couplers) 102, such as shown in FIG. 1B, have also been investigated and compared with conventional circular couplers. The results demonstrated that higher inductance values can be achieved for such conventional rectangular couplers 102 as compared to conventional circular couplers 100. Without wishing to be bound by theory, a possible explanation may be that the rectangular geometry shape results in a longer current conduction path compared to the circular geometry shape having a dimension that is the same (e.g., the diameter of the circular coupler and a width of the rectangular (e.g., square) coupler being the same). However, it was found that the magnetic coupling coefficient *k* of the conventional rectangular coupler is lower than that of the conventional circular coupler. Furthermore, it was found that the conventional rectangular coupler 102 has low lateral coil misalignment tolerance in both the x and y directions, unlike the conventional circular coupler 100.

Various other shapes/configurations of couplers have also been previously disclosed, such as a triangular shape (e.g., as shown in FIG. 1C) 104, an elliptical shape (e.g., as shown in FIG. 1D) 106, a hexagonal shape (e.g., as shown in FIG. 1E) 108 and a pentagonal shape (e.g., as shown in FIG. 1F) 110, depending on the practical requirements.

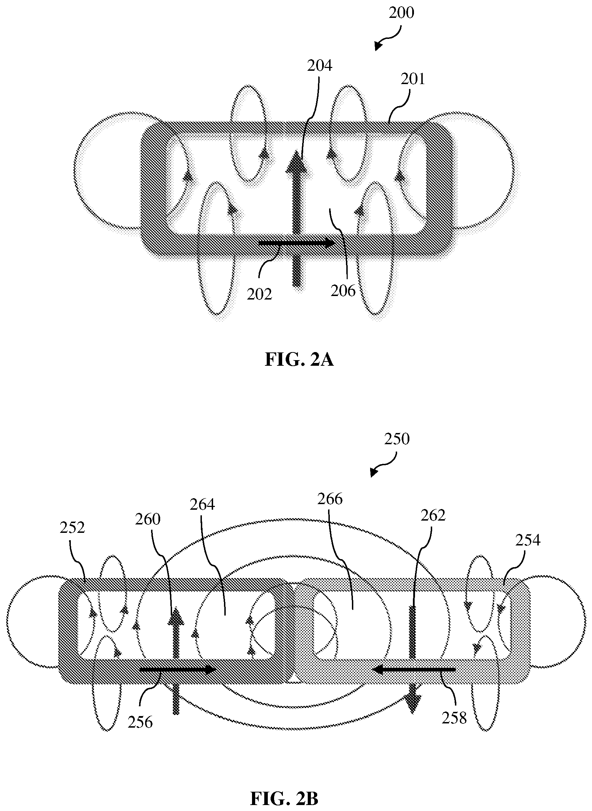

Despite the different coil geometries shown in FIGs. 1A to 1F, these coils may be classified as having a unipolar coil topology 200 whereby the magnetic field generated around the coil 201 from a time-varying current flow (which may also be referred to as an alternating current (AC)) 202 therein flows in the same direction 204 through an area 206 defined by (e.g., defined by the path or configuration of) the coil 201 (which may also be referred to as inside (or an inside portion defined by) the coil 201), such as illustrated in FIG. 2A. Bipolar coil topologies 250 have also been previously disclosed whereby the magnetic field generated around the respective coil 252, 254 from a respective time-varying current flow 256, 258 therein flows in the same direction 260, 262 through a respective area 264, 266 defined by the respective coil 252, 254, such as illustrated in FIG. 2B.

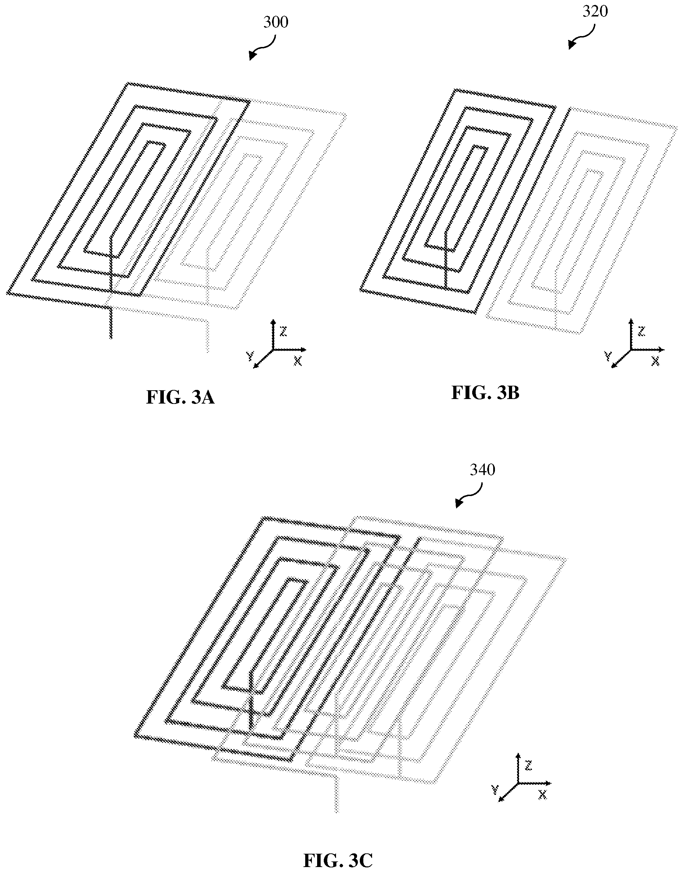

FIGs. 3A to 3C depict schematic drawings of example conventional bipolar couplers, namely, a conventional bipolar (BP) coupler (or BP pad) 300, a conventional double D (DD) coupler (or DD pad) 320 and a conventional DD coupler with an additional quadrature coil (DDQ coupler or pad) 340, respectively. The BP coupler 300 may be configured by inter-coupling (overlapping) two separate rectangular shaped coils as shown in FIG. 3A. The DD coupler 320 may be configured by structuring two rectangular coils back-to-back (i.e., in series) using only one single wiring (e.g., copper wiring) as shown in FIG. 3B. The DDQ coupler 340 may be configured by arranging an additional quadrature coil (e.g., formed by a set of rectangular coil loops) to overlay (overlap) the center of the DD coupler as shown in FIG. 3C. It was found that the magnetic coupling coefficient k may be improved using bipolar coupler topologies, such as the example conventional bipolar couplers shown in FIGs. 3A to 3C.

Through experiments, it was found that the conventional DD coupler 320 has good tolerance of y-axis directional coil misalignment but not in the x-axis direction (e.g., poor x-axis misalignment tolerance). In contrast, the conventional BP coupler 300 has better tolerance of misalignment in the x-axis direction but not in the y-axis direction (e.g., poor y-axis misalignment tolerance). The conventional DDQ coupler 340 was found to have extended the tolerance of the conventional DD coupler 320 in the x-axis direction, but requires additional materials for implementing a quadrature (unipolar rectangular) coil above the conventional DD coupler.

Accordingly, various embodiments of the present invention provide a coupler and a method for wireless power transfer, that seek to overcome, or at least ameliorate, one or more of the deficiencies in conventional couplers and methods for wireless power transfer, such as but not limited to, improving wireless power transfer efficiency and/or reducing magnetic flux leakage. For example, the wireless power transfer efficiency may be improved by improving coil misalignment tolerance capability. For example, various embodiments of the present invention provide a coupler that improves or has good misalignment tolerance in both x-axis and y-axis directions (hence advantageous over the conventional BP and DD couplers), such as similar to the conventional DDQ coupler but without requiring the above-described quadrature coil of the conventional DDQ coupler (hence advantageously requiring less materials as compared to the conventional DDQ coupler). In addition, for example, magnetic flux leakage has been found to be reduced compared to conventional unipolar couplers. In this regard, reducing magnetic flux leakage reduces the exposed electromagnetic field (EMF) which can be hazardous to biological health issues. Therefore, for example, various embodiments of the present invention enable the coupler to be made more compact with the reduction of EMF shielding efforts required, while satisfying guidelines provided by the International Commission on Non-Ionizing Radiation Protection (ICNIRP).

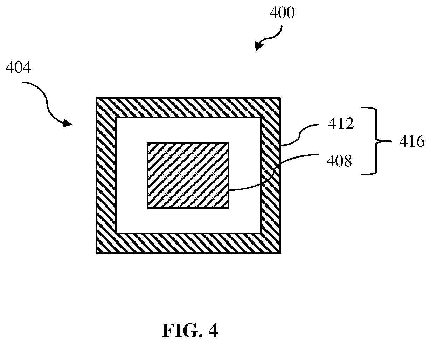

FIG. 4 depicts a schematic drawing of a coupler 400 for wireless power transfer according to various embodiments of the present invention. The coupler 400 comprises a coil 404 configured for wireless power transfer based on magnetic induction, the coil 404 comprising a plurality of coil portions 408, 412, the plurality of coil portions comprising a first coil portion 408 and a second coil portion 412 wound in opposite directions. Furthermore, as illustrated in FIG. 4, the first coil portion 408 is nested within the second coil portion 412. In various embodiments, the first coil portion 408 and the second coil portion 412 being wound in opposite directions mean that the first coil portion 408 and the second coil portion 412 are wound (e.g., configured or arranged) to generate or accommodate opposite (opposing) magnetic field (magnetic flux) through a respective area defined thereby from a time-varying current flow therein. In other words, the first coil portion 408 is wound to generate or accommodate a magnetic field (which may be referred to as a first magnetic field) through an area (which may be referred to as a first area) defined by (e.g., defined by a periphery or parameter of a path or configuration/shape of (e.g., outer configuration/shape) of) the first coil portion 408 and the second coil portion 412 is wound to generate or accommodate a magnetic field (which may be referred to as a second magnetic field) through an area (which may be referred to as a second area) defined by the second coil portion 412 from a time-varying current flow in the first and second coil portions such that the first and second magnetic fields through the first and second areas, respectively, are in opposite directions.

It will be appreciated by a person skilled in the art that FIG. 4 illustrates the presence of a coil 404 having a plurality of coil portions 408, 412, and furthermore, the configuration or arrangement of the first coil portion 408 being nested within the second coil portion 412, but does not actually illustrate or define various details or parameters (e.g., shape, dimensions/size, number of loops/turns, and so on) of the coil 404. In other words, it will be appreciated by a person skilled in the art that the coil is not limited to the shape and/or dimensions/size of the coil 404 shown in FIG. 4 in any way.

In various embodiments, the plurality of coil portions 408, 412 of the coil 404 are electrically connected (not illustrated in FIG. 4), such as directly or via one or more connector portions (e.g., conductor or wire) to form one continuous winding.

In various embodiments, a coil portion being nested within another coil portion means that the coil portion is at least substantially, primarily or completely located in or within an area (e.g., for a planar coil) or volume (e.g., for a helix coil) surrounded or enclosed (e.g., at least substantially surrounded or enclosed with respect to a plane) by the other coil portion. For example, the coil portion is immersed by or engulfed by the other coil portion.

According to various embodiments, configuring the coil 404 to include a first coil portion 408 and a second coil portion 412 wound in opposite directions has been found to provide a number of advantages, such as but not limited to, improving wireless power transfer efficiency, improving coil misalignment tolerance capability (e.g., both lateral and angular coil misalignment tolerance), and/or reducing magnetic flux leakage. As a result, for example, the effective power transfer area (region or zone) coverage may be increased (thus, for example, enabling a larger air gap between the transmitter and receiver couplers without an unsatisfactory amount of reduction in wireless power transfer efficiency) and/or the coil size/footprint may be minimized (e.g., a smaller coil size/footprint may be achieved as a result of improvement in the wireless power transfer efficiency and/or coil misalignment tolerance capability). Without wishing to be bound by theory, a possible explanation may be that by configuring the coil 404 to include a first coil portion 408 (e.g., an inner coil portion) and a second coil portion 412 (e.g., an outer coil portion) wound in opposite directions, the magnetic flux generated by the coil 404 has been found to flow out from the inner coil portion 408 (e.g., an area defined by the inner coil portion 408) (e.g., like a water fountain) and then back into the outer coil portion 412 (e.g., an area defined by the outer coil portion 412), which has been found to for example advantageously improve coil misalignment tolerance capability, reduce magnetic flux leakage, and/or improve wireless power transfer efficiency.

In various embodiments, the first coil portion comprises one or more loops (which may be referred to as first loop(s)) and the second coil portion comprises one or more loops (which may be referred to as second loop(s)) wound in an opposite direction to the one or more first loops. The term "loop" may also interchangeably be referred to as "turn". In various embodiments, each loop or turn is at least substantially a complete loop, that is, the loop has been wound through at least about 360° or more. It will be appreciated by a person skilled in the art that a loop being wound through at least about 360° or more is not necessarily circular and may be any other shapes as desired or as appropriate, such as but not limited to, rectangular (including square), triangle, trapezoid, hexagon and so on. Furthermore, for each loop, it will be appreciated that it is not necessary that the ending point of the loop to meet the starting point of the loop, that is, the ending point and the starting point may be offset in an axial direction, such as in the case of a spiral coil.

In various embodiments, the opposite directions described herein correspond to clockwise and anti-clockwise directions. That is, the first coil portion 408 is wound in a clockwise direction and the second coil portion 412 is wound in an anti-clockwise direction, or the second coil portion 412 is wound in a clockwise direction and the first coil portion 408 is wound in an anti-clockwise direction. Similarly, it will be appreciated by a person skilled in the art that clockwise and anti-clockwise directions are not necessarily circular directions and may be any other shapes as desired or as appropriate, such as but not limited to, rectangular (including square), triangle, trapezoid, hexagon and so on. In various embodiments, the above-described counter-winding of coil direction (anti-directional winding structure/configuration) between the first and second coil portions is provided for generating or accommodating opposing magnetic flux (i.e., a magnetic field through an area (first area) defined by the first coil portion and a magnetic field through an area (second area) defined by the second coil portion are opposite in direction).

In various embodiments, the coil is configured to have a planar (flat) spiral configuration. Similarly, it will be appreciated by a person skilled in the art that a spiral configuration is not necessarily circular, but may be any other shapes as desired or as appropriate, such as but not limited to, rectangular (including square), triangle, trapezoid, hexagon and so on, as long as the coil spirals towards an inner portion, such as but not limited to, a center thereof. For example, for wireless charging applications, planar coil configuration may be preferred according to various embodiments as the magnetic coupling between the primary and secondary coils takes effect depending on the distance therebetween (i.e., air gap), which may be taken from the nearest points between the primary and secondary coils. Thus, the magnetic coupling may be better maximized by using planar coil configurations as compared to, for example, helix/solenoid configuration. However, the present invention is not limited to a planar coil configuration and other types of configurations, such as helix/solenoid configuration may be provided as desired or appropriate.

In various embodiments, the first coil portion 408 and the second coil portion 412 are each configured to have a unipolar coil configuration, and the coil has a multi-polar coil configuration (design or topology). Accordingly, in various embodiments, the coil 404 has a multi-polar coil configuration with each coil portion thereof (e.g., the first and second coil portions) having a unipolar coil configuration.

In various embodiments, the first coil portion 408 and the second coil portion 412 together form (constitute) a first anti-directional coil section 416, and the coil 404 further comprises one or more additional anti-directional coil sections, each additional anti-directional coil section comprising a third coil portion and a fourth coil portion wound in opposite directions, wherein the third coil portion is nested within the fourth coil portion. In this regard, FIG. 5 depicts a schematic drawing of a coupler 500 for wireless power transfer according to various embodiments of the present invention comprising a coil 404 further including the above-mentioned one or more additional anti-directional coil section, each additional anti-directional coil section 516 comprising a third coil portion 508 and a fourth coil portion 512 wound in opposite directions, whereby the third coil portion 508 is nested within the fourth coil portion 512. In various embodiments, the plurality of anti-directional coil sections 416, 516 are electrically connected (not illustrated in FIG. 5), such as directly (e.g., integrally formed) or via one or more connector portions (e.g., conductor or wire) to form one continuous winding. In various embodiments, each additional anti-directional coil section 516 may be configured in the same or similar (or corresponding) manner as the first anti-directional coil section 416 as described herein according to various embodiments and thus need not be repeated with respect to each additional anti-directional coil section 516 for clarity and conciseness. It will be appreciated by a person skilled in the art that only one additional anti-directional coil section is shown in FIG. 5, but the present invention is not limited as such, and the number of additional anti-directional coil section may be determined as desired or as appropriate for various purposes (e.g., illustrated by the dashed lines in FIG. 5).

In various embodiments, as shown in FIG. 5, the first anti-directional coil section 416 is nested within the one or more additional anti-directional coil sections, such as within the additional anti-directional coil section 516. In other words, for a coil 404 comprising a plurality of anti-directional coil sections, each anti-directional coil section (except the last or outer-most anti-directional coil section) (e.g., an inner anti-directional coil section) is nested within a subsequent anti-directional coil section (e.g., an immediately subsequent or an outer anti-directional coil section). Similarly as described hereinbefore with respect to a coil portion, in various embodiments, an anti-directional coil section being nested within another anti-directional coil section means that the coil portion is at least substantially, primarily or completely located in or within an area (e.g., for a planar coil) or volume (e.g., for a helix coil) surrounded or enclosed (e.g., at least substantially surrounded or enclosed with respect to a plane) by the other anti-directional coil section.

In various embodiments, the coil is configured as one continuous winding. The coil may be a wire and may be made of any conductor materials that allows the flow of an electrical current, and preferably, has a high electrical conductivity. For example, conductor materials made of metal are common electrical conductors, such as but not limited to, metals. In this regard, copper is typically used due to its high conductivity. In various embodiments, non-metallic conductor materials may also be used, such as graphite and conductive polymers. For example and without limitation, the coil configured as one continuous winding may be a single copper wire or multiple strands of isolated/enamelled wires.

In various embodiments, the multiple coil portions in each anti-directional coil section are continuous, that is, form one continuous winding.

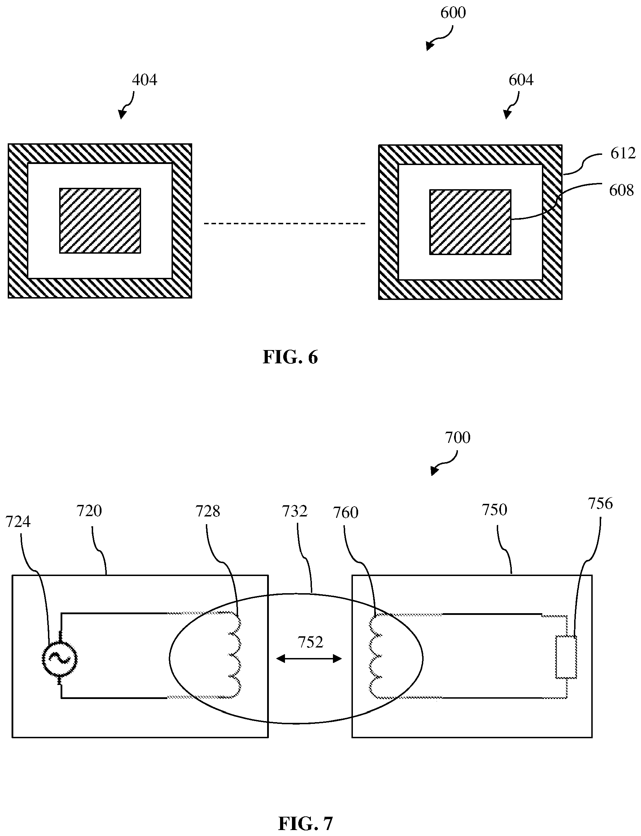

In various embodiments, the coil 404 forms (constitutes) a first coil cell, and the coupler further comprises one or more additional coil cells connected to the first coil cell, each additional coil cell comprising a second coil configured for wireless power transfer based on magnetic induction, the second coil comprising a plurality of coil portions comprising a fifth coil portion and a sixth coil portion wound in opposite directions, wherein the fifth coil portion is nested within the sixth coil portion. In this regard, FIG. 6 depicts a schematic drawing of a coupler 600 for wireless power transfer according to various embodiments of the present invention comprising the first coil cell 404 and the above-mentioned one or more additional coil cells connected to the first coil cell 404, each additional coil cell 604 comprising a second coil configured for wireless power transfer based on magnetic induction, the second coil comprising a plurality of coil portions comprising a fifth coil portion 608 and a sixth coil portion 612 wound in opposite directions, whereby the fifth coil portion 608 is nested within the sixth coil portion 612. In various embodiments, each additional coil cell 604 may be configured in the same or similar (or corresponding) manner as the first coil cell 404 as described herein according to various embodiments and thus need not be repeated with respect to each additional coil cell 604 for clarity and conciseness. It will be appreciated by a person skilled in the art that only one additional coil cell 604 is shown in FIG. 6, but the present invention is not limited as such, and the number of additional coil cells may be determined as desired or as appropriate for various purposes (e.g., illustrated by the dashed lines in FIG. 6). In various embodiments, for a coupler 600 comprising a plurality of coil cells, each coil cell (except the last coil cell) is electrically connected, such as directly (e.g., integrally formed) or via one or more connectors (e.g., conductor or wire), to an adjacent or subsequent coil cell (e.g., an immediately adjacent or subsequent coil cell), such as connected in series or in parallel.

In various embodiments, the coupler further comprises a resonance capacitor connected to the coil in series or in parallel to form a resonance circuit configured for resonant inductive power transfer. In various other embodiments, the coupler may be configured to form a non-resonance circuit (e.g., without any resonance capacitor connected to the coil) for non-resonance operation.

In various embodiments, the coupler is a transmitter coupler configured to receive a time-varying current (i.e., alternating current (AC)) from a power source connected thereto for generating a magnetic field to perform wireless power transfer with a receiver coupler over an air gap based on magnetic induction.

In various other embodiments, the coupler is a receiver coupler configured to couple with a magnetic field generated from a transmitter coupler to induce a current in the receiver coupler for supplying power to an electrical load connected to the receiver couple to perform wireless power transfer with the transmitter coupler over an air gap based on magnetic induction.

FIG. 7 illustrates a system 700 for wireless power transfer according to various embodiments of the present invention. The system 700 comprises a wireless power transmitter 720 and a wireless power receiver 750 separated by an air gap 752.

In various embodiments, the wireless power transmitter 720 comprises a power source 724 configured to generate a time-varying current; and a transmitter coupler 728 connected (electrically connected) to the power source 724. Accordingly, the power source 724 and the transmitter coupler 728 may together form a circuit (transmitter circuit). In this regard, the transmitter coupler 728 is configured to receive the time-varying current from the power source 724 for generating a magnetic field 732 to perform wireless power transfer with a receiver coupler 760 over the air gap 752 based on magnetic induction.

In various embodiments, the wireless power receiver 750 comprises an electrical load 756; and the receiver coupler 760 connected to the electrical load 756. Accordingly, the receiver coupler 760 and the electrical load 756 may together form a circuit (receiver circuit). In this regard, the receiver coupler 760 is configured to couple with the magnetic field 732 generated from the transmitter coupler 728 to induce a current in the receiver coupler 760 for supplying power to the electrical load 756 connected (electrically connected) to the receiver coupler 760 to perform wireless power transfer with the transmitter coupler 728 over the air gap 752 based on magnetic induction.

In various embodiments, at least one of the transmitter coupler 728 and the receiver coupler 760 is a coupler as described herein according to various embodiments of the present invention, such as the coupler as described with reference to any one of FIGs. 4 to 6. In various embodiments, the transmitter coupler 728 and the receiver coupler 760 are each a coupler as described herein according to various embodiments of the present invention. In various embodiments, only one of the transmitter coupler 728 and the receiver coupler 760 is a coupler as described herein according to various embodiments of the present invention.

In various embodiments, the transmitter coupler 728 and the receiver coupler 760 may be configured to have the same or similar configuration or shape. For example, both the transmitter coupler 728 and the receiver coupler 760 may be configured as the coupler according to various embodiments as described with reference to any one of FIGs. 4 to 6. By way of an example only and without limitation, the transmitter coupler 728 and the receiver coupler 760 may be configured according to various embodiments as described with reference to any one of FIGs. 4 to 6 and having the same rectangular (e.g., square) configuration or shape (e.g., square coil cell).

In various other embodiments, the transmitter coupler 728 and the receiver coupler 760 may be configured to have different configurations or shapes. For example, the transmitter coupler 728 and the receiver coupler 760 may be configured according to various embodiments as described with reference to any one of FIGs. 4 to 6 but transmitter coupler 728 may be configured to have a different configuration or shape as the receiver coupler 760. For example, the coil cell of the transmitter coupler 728 may have a different configuration or shape as the coil cell of the receiver coupler 760, and/or the number of coil cells in the transmitter coupler 728 may be different to the number of coil cells in the receiver coupler 760. In various embodiments, different combinations of configurations or shapes between the transmitter and receiver coupler may be selected from, but not limited to, square, rectangular (excluding square), circular, triangle, trapezoid, hexagon and so on. In various embodiments, different number of coil cells in the transmitter and receiver couplers, respectively, may be in the range of one to five coil cells, or one to two coil cells.

In various embodiments, only one of the transmitter coupler 728 and the receiver coupler 760 may be configured according to various embodiments as described with reference to any one of FIGs. 4 to 6, and the other one of the transmitter coupler 728 and the receiver coupler 760 may configured as a conventional coupler, such as any one of the couplers as described with reference to in FIGs. 1 to 3. By way of an example only and without limitation, one of the transmitter coupler 728 and the receiver coupler 760 may be configured according to various embodiments as described with reference to any one of FIGs. 4 to 6 and having a rectangular (e.g., square) configuration and the other one of the transmitter coupler 728 and the receiver coupler 760 may be configured as a conventional unipolar coupler and having a rectangular (e.g., square) configuration.

The electrical load 756 may be any electrical component or element requiring power for performing an operation or a function, or to store power/energy, such as but not limited to, a rechargeable battery.

It will be appreciated by a person skilled in the art that additional element(s) or component(s) may be added to the wireless power transmitter 720 and/or the wireless power receiver 750 as desired or as appropriate for various purpose, such as the resonance capacitor as described hereinbefore to form a resonance circuit configured for resonant inductive power transfer. As another example, it will be appreciated by a person skilled in the art that the wireless power receiver 750 may include an element or component (e.g., a bidirectional rectifier) configured to convert the time-varying current (AC) induced by the receiver coupler to a direct current (DC) if the electrical load 756 (e.g., a rechargeable battery) requires a direct current.

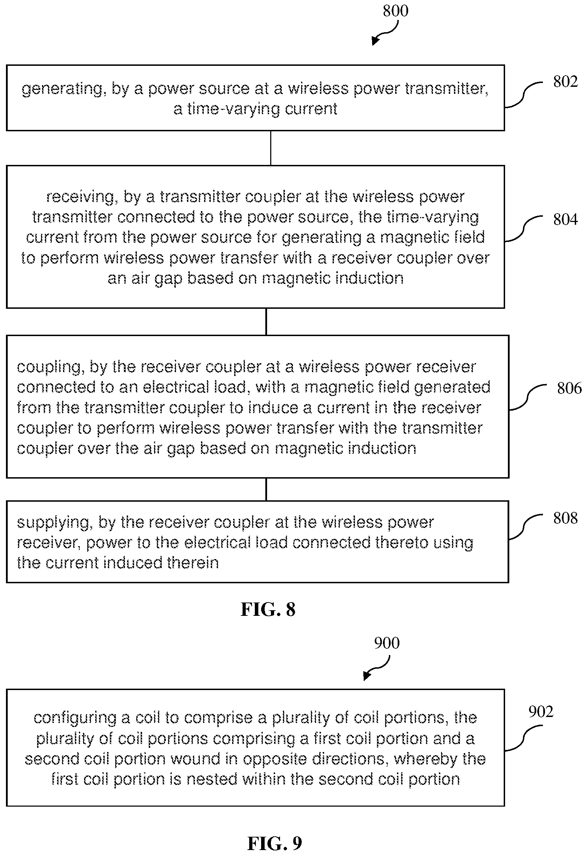

FIG. 8 depicts a flow diagram of a method 800 of wireless power transfer comprising: generating (at 802), by a power source 724 at a wireless power transmitter 720, a time-varying current; and receiving (at 804), by a transmitter coupler 728 at the wireless power transmitter 720 connected to the power source 724, the time-varying current from the power source 724 for generating a magnetic field 732 to perform wireless power transfer with a receiver coupler 760 over an air gap 752 based on magnetic induction; coupling (at 806), by the receiver coupler 760 at a wireless power receiver 750 connected to an electrical load 756, with the magnetic field 732 generated from the transmitter coupler 728 to induce a current in the receiver coupler 760 to perform wireless power transfer with the transmitter coupler 728 over the air gap 752 based on magnetic induction; and supplying (at 808), by the receiver coupler 760 at the wireless power receiver 750, power to the electrical load 756 connected thereto based on the current induced therein. As described hereinbefore, the wireless power transmitter 720 and the wireless power receiver 750 are separated by the air gap 752.

FIG. 9 depicts a flow diagram of a method 900 of manufacturing a coupler for wireless power transfer according to various embodiments of the present invention, such as the coupler as described with reference to any one of FIGs. 4 to 6. The method 900 comprises configuring (at 902) a coil 404 to comprise a plurality of coil portions, the plurality of coil portions comprising a first coil portion 408 and a second coil portion 412 wound in opposite directions, whereby the first coil portion 408 is nested within the second coil portion 412.

In various embodiments, the method 900 is for manufacturing a coupler according to various embodiments of the present invention, such as described herein with reference to any one of FIGs. 4 to 6, therefore, various aspects or steps of the method 900 may correspond to various aspects or features of the coupler as described herein, and thus need not be repeated with respect to the method 900 for clarity and conciseness. In other words, various embodiments described herein in context of the coupler are analogously valid for the method 900, and vice versa. For example, corresponding to the feature of the coupler that the first coil portion is wound in a clockwise direction and the second coil portion is wound in an anti-clockwise direction as described hereinbefore according to various embodiments, the above-mentioned configuring a coil in the method 900 correspondingly comprises winding the first coil portion in a clockwise direction and the second coil portion in an anti-clockwise direction. In various embodiments, the coil may be formed on a substrate made of a non-conductive material, such as but not limited to, non-metallic epoxy resin, plastic-like acrylonitrile butadiene styrene (ABS), acrylic materials, nylon and so on.

A coil (or wire) may be formed into a configuration or shape as described herein according to various embodiments (such as described herein with reference to any one of FIGs. 4 to 6) using existing techniques known in the art. For example, a coil (a continuous winding) may be laid onto a substrate (e.g., mould or housing) that is made of non-conductive materials. The substrate may comprise one or more tracks (or grooves) configured/shaped for accommodating the coil (to be laid therein along the track(s)) for forming/configuring the coil into a desired shape or configuration. In other words, the track(s) may be configured/shaped in the substrate in accordance with (to conform with) a desired coil shape or configuration, and the coil may then be configured (wound) into the desired shape/configuration as described herein according to various embodiments of the present invention by laying/placing the coil along the track(s). As another example, a cast may be configured/designed similarly to the above-described substrate with tracks (or grooves) in order to accommodate or secure the wire in the desired shape or configuration before being encased in an epoxy. The cast may thereafter be removed once the epoxy resin is hardened and the coil shape is fixed. As a further example, the conductive winding of the desired coil shape or configuration may be formed using multiple layers of printed circuit boards (PCBs) to form the coil turns.

It will be appreciated by a person skilled in the art that the terminology used herein is for the purpose of describing various embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

In order that the present invention may be readily understood and put into practical effect, various example embodiments of the present invention will be described hereinafter by way of examples only and not limitations. It will be appreciated by a person skilled in the art that the present invention may, however, be embodied in various different forms or configurations and should not be construed as limited to the example embodiments set forth hereinafter. Rather, these example embodiments are provided so that this disclosure will be thorough and complete, and will fully convey the scope of the present invention to those skilled in the art.

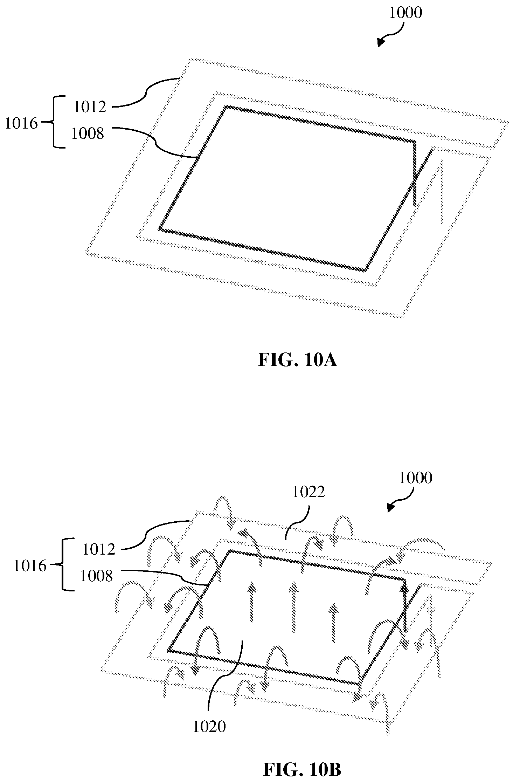

According to various example embodiments, a coil structure (which may also be referred to as a coupler or a coil) 1000 may be configured/designed as shown in FIG. 10A. For example, the coil 1000 may be constructed using a single copper wiring and may be configured to form one or more anti-directional sections, each anti-directional section 1016 including a first coil portion 1008 (e.g., shown as a darker line in FIG. 10A) and a second coil portion 1012 (e.g., shown in a lighter line in FIG. 10A) wound in opposite directions, and whereby the first coil portion 1008 is nested within the second coil portion 1012. In the example of FIG. 10A, the coil 1000 may thus form a set 1016 of anti-directional winding unipolar coil portions in a nested loop arrangement, whereby the outer coil portion (or outer loop) 1012 has a reversed or opposite coiling direction than the inner coil portion (or inner loop) 1008. Such a configuration of the coil 1000 (e.g., anti-directional coil section 1016, which may also be referred to as inverted coupling loop configuration or the like) has advantageously been found to improve both lateral and angular coil misalignment tolerance, such as covering all angles and directions. For ease of reference and without limitation, a coil having such a configuration according to various example embodiments of the present invention may be referred to as an "X-coil".

As described hereinbefore according to various embodiments, a first coil portion and a second coil portion being wound in opposite directions mean that the first coil portion and the second coil portion are wound (e.g., configured or arranged) to generate or accommodate opposite (opposing) magnetic field (magnetic flux) through a respective area defined thereby from a time-varying current flow therein. In other words, the first coil portion is wound to generate or accommodate a magnetic field (which may be referred to as a first magnetic field) through an area (which may be referred to as a first area) defined by the first coil portion and the second coil portion is wound to generate or accommodate a magnetic field (which may be referred to as a second magnetic field) through an area (which may be referred to as a second area) defined by the second coil portion from a time-varying current flow in the first and second coil portions such that the first and second magnetic fields through the first and second areas, respectively, are in opposite directions.

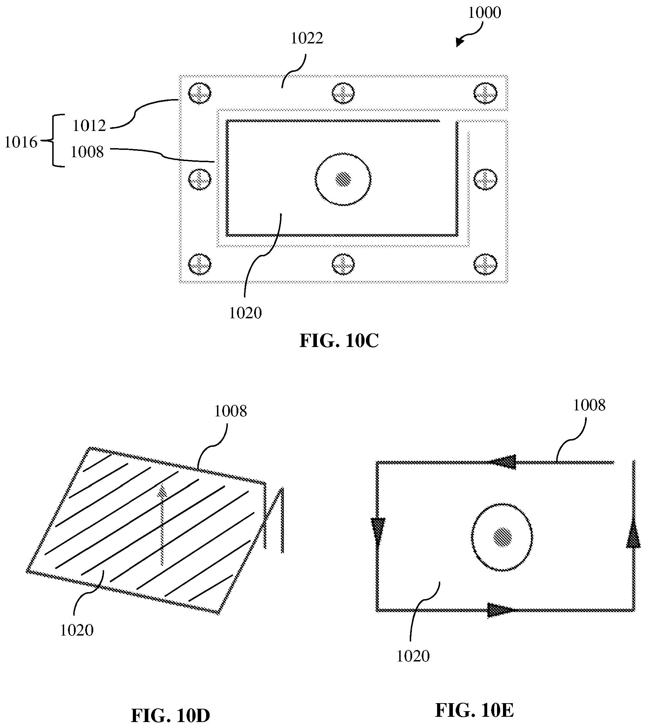

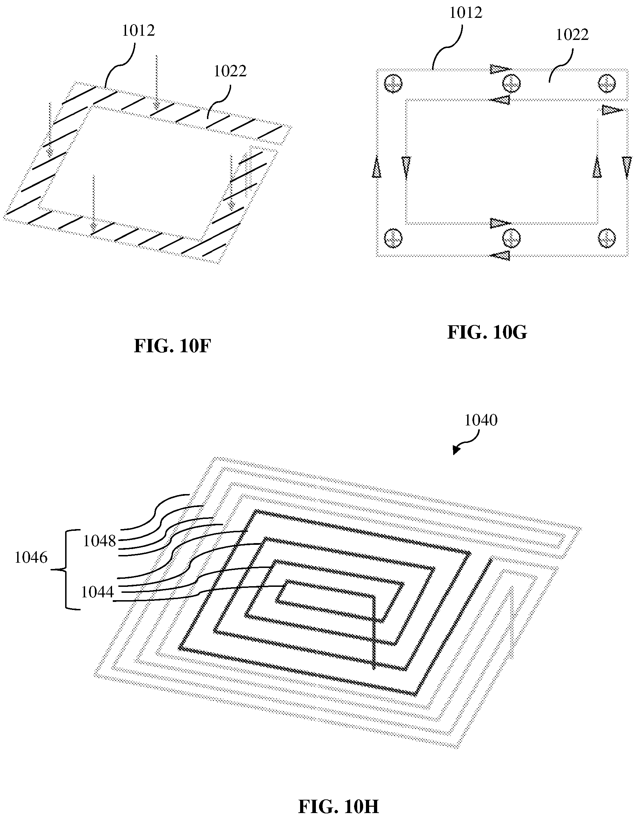

As an example illustration, FIGs. 10B and 10C depict drawings of the coil 1000 illustrating the magnetic flux generated by the coil 1000 from a time-varying current flow therein. As shown, the magnetic field through the first area 1020 defined by the first coil portion 1008 and the magnetic field through the second area 1022 defined by the second coil portion 1012 are in opposite directions. As a further illustration, FIGs. 10D and 10E depict schematic drawings of the first coil portion 1008 along with the above-mentioned magnetic field through (flowing out of or upward of) the first area 1020 (represented by the shaded area in FIG. 10D) (e.g., defined by a periphery or parameter of a path or configuration/shape of (e.g., outer configuration/shape of) the first coil portion 1008). FIGs. 10F and 10G depict schematic drawings of the second coil portion 1012 along with the above-mentioned magnetic field through (flowing into or downward of) the second area 1022 (represented by the shaded area in FIG. 10F) (e.g., defined by a periphery or parameter of a path or configuration/shape of (e.g., outer configuration/shape of) the second coil portion 1012). Furthermore, for example from FIGs. 10E and 10G whereby the loop directions are shown, it can be observed that the first coil portion 1008 is wound in an anti-clockwise direction and the second portion 1012 is wound in a clockwise direction. In various embodiments, the clockwise and anti-clockwise directions refer to the coil winding direction of one or more complete loops, instead of the direction of a loop or coil segment.

By way of an example and without limitation, FIG. 10H depicts a coil 1040 comprising a first coil portion 1044 and a second coil portion 1048 electrically connected to each other (e.g., coil portions of a continuous winding), whereby the first coil portion 1044 comprises a plurality of loops (or turns) (four loops shown in FIG. 10H as an example) and the second coil portion 1048 comprising a plurality of loops (or turns) (four loops shown in FIG. 10H as an example). The first coil portion 1044 and the second coil portion 1048 are wound in opposite directions and together form an anti-directional section 1046, whereby the first coil portion 1044 is nested within the second coil portion 1048.

With the anti-directional coil section, for example, the coil misalignment performance has been found to improve over conventional DD and BP couplers. Furthermore, less materials are required when compared with the conventional DDQ coupler even though the conventional DDQ coupler may possess a certain degree of lateral coil misalignment tolerance in the x-axis and y-axis directions. For example, implementing the anti-directional coil section has been found to make the magnetic couplings between the transmitter coupler and the receiver coupler to be less susceptible to angular coil misalignment. Accordingly, the anti-directional coil section has advantageously been found to allow the effective charging area (region/zone) to be broadened, while improving the coil misalignment performances when compared to conventional coupler configurations, such as convention unipolar and bipolar coupler configurations.

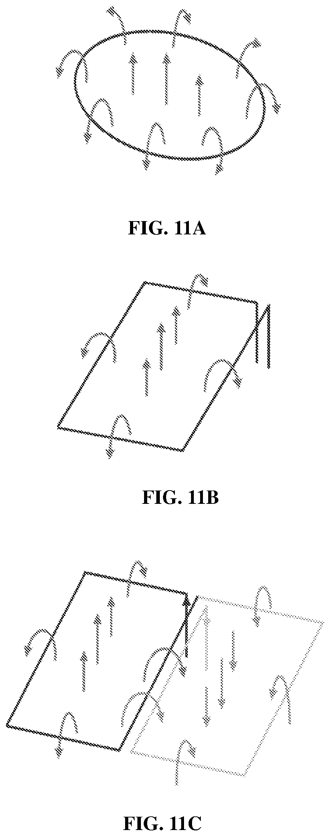

The anti-directional coil section according to various example embodiments advantageously combines various advantages of conventional coil configurations, such as conventional unipolar coil configurations/designs and the bipolar DD coil configuration/design. For example, conventional unipolar coil configurations shown in FIGs. 1A to 1F are the simplest configurations or concepts, especially the circular coil shown in FIG. 1A which is derived from the pot core shape used in transformers. Due to the circular configuration, the magnetic flux may flow out of the coil (e.g., like a water fountain) as shown in FIG. 11A. For example, the magnetic flux path height may be limited proportionally to about one quarter of the coil diameter. Therefore, the diameter of the coil may be required to increase by four times proportionally to the increase in the air gap distance. As a result, the required coil area/footprint may be undesirably large, making such a conventional unipolar coil configuration bulky and difficult for practical implementation. Furthermore, there may be an undesirably large amount of magnetic flux leakage (exposed electromagnetic field (EMF)) associated with the conventional unipolar coil configuration, which can be hazardous to biological health issues. For example, guidelines for limiting the time-varying EMF exposure up to 300 GHz that protect against known adverse health effects are established by the ICNIRP. Therefore, additional shielding of EMF may be required when implementing the conventional unipolar coil configurations depending on the exposed EMF and the operating frequency range of the applications. As another example, in the case of a conventional unipolar rectangular coil shown in FIG. 11B, similarly, the magnetic flux flows out from the center of the conventional unipolar rectangular coil, but it has better coil misalignment tolerance in both x and y axis directions compared to the conventional unipolar circular coil shown in FIG. 11A.

The conventional bipolar DD coil configuration shown in FIGs. 3B and 11C is constructed with an anti-directional winding structure between the left half plane and right half plane. Such a configuration allows the magnetic flux to flow unidirectionally from the left loop into the right loop as shown in FIG. 11C or vice versa, forming a circular magnetic flux loop such as illustrated in FIG. 2B. With such a configuration, when two DD coils (one at the transmitter side and the other at the receiver side) are placed over one another in a parallel manner with an air gap height/length therebetween that is about half the coil's length (planar cross-sectional dimension), the magnetic flux density becomes stronger, and thus current in the DD coil at the receiver side may then flow by being within the magnetic flux path coverage. The magnetic flux leakage may also be reduced due to its single-sided flux magnetic coupler configuration compared to conventional bipolar couplers. Nevertheless, the conventional bipolar DD coil configuration has a number of problems, such as the lateral coil misalignment tolerance capability being limited to the y-axis direction.

In contrast, the coil according to various example embodiments of the present invention is configured/designed to include two unipolar coil portions (forming an anti-directional coil section) arranged in a nested manner using a continuous wire, which may be a single wire (e.g., copper wire) or multiple strands or multiple turns of wire (e.g., litz wire), by winding each of the two unipolar coil portions in counter-directions. For example, the outer coil winding (e.g., corresponding to the second coil portion as described hereinbefore according to various embodiments) has a reversed coil winding direction compared to the inner coil winding (e.g., corresponding to the first coil portion as described hereinbefore according to various embodiments). Without wishing to be bound by theory, an explanation may be that the magnetic flux generated by such a coil configuration may flow out from the first or inner coil portion (e.g., like a water fountain) and then back into the second or outer coil portion as shown in FIG. 10B. For example, in contrast to the conventional circular coupler as shown in FIG. 11A, the magnetic flux leakage is advantageously reduced due to the one or more of the anti-directional coil sections (anti-directional windings), which reduces the EMF exposure that may result in adverse health effects and make the coil more compact with less shielding of the exposed EMF required (due to the reduced EMF exposure) while satisfying the guidelines provided by ICNIRP.

For example, without wishing to be bound by theory, since the magnetic flux can flow out in all directions based on the configuration of one or more anti-directional coil sections, good coupling coefficient can be achieved between the primary (transmitter) and the secondary (receiver) side with improved coil misalignment tolerance capability. For example, the coil misalignment performances in terms of both lateral and angular coil misalignments have been found to be greatly enhanced, thus providing a wider effective area for wireless power transfer (e.g., wireless charging area/zone). Such a configuration of the coil(s), including multiple unipolar coil portions (forming anti-directional coil section(s)), according to various example embodiments may be referred to as a multi-polar coil topology.

Various example embodiments, in general, configure the coil to alternate the anti-directional winding of multiple unipolar coils in a nested structure. It will be appreciated to a person skilled in the art that the shape/configuration of coil is not limited to a square or rectangular shape, such as shown in FIGs. 10A and 10B, and other shapes/configurations may also be implemented as desired or as appropriate for various purposes, such as but not limited to, circular, triangular, trapezoid, hexagon, and so on.

In various example embodiments, the coil 1000, 1040 may be configured to include one or more additional anti-directional coil sections (which may be referred to as extended coil layers). By way of an example only and without limitation, FIG. 12A depicts a coil 1200 further including one additional anti-directional coil section 1202, that is, a first anti-directional coil section 1212 and a second (additional) anti-directional coil section 1202 connected via a connector portion 1208 to form a continuous winding.

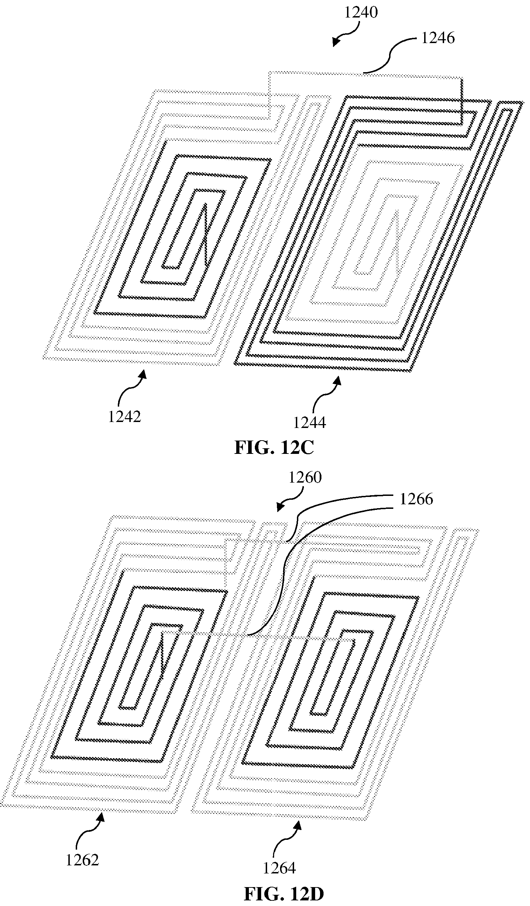

In various example embodiments, the coil, such as shown in FIGs. 10A, 10B, 10H or 12A, may form (constitutes) a coil cell, and one or more additional coil cells may be connected to the coil cell via a connector portion to form a continuous winding. By way of an example only and without limitation, FIGs. 12B, 12C and 12D each show a coupler 1220, 1240, 1260 comprising a first coil cell and a second coil cell (additional coil cell) connected (electrically connected) to the first coil cell. Accordingly, with such a coil cellular structure, the coupler according to various example embodiments may be configured based on various combinations of coil cells, such as series-connected coil cells as shown in FIG. 12B and FIG. 12C and parallel-connected coil cells as shown in FIG. 12D.

FIG. 12B depicts a coupler 1220 comprising a first coil cell 1222 and a second coil cell 1224 connected in series to the first coil cell 1222 via a connector portion 1226, whereby the first and second coil cells have the same coil configuration, or in other words, have the same winding direction (i.e., wound in the same direction). For example, the outer coil portions of the first and second coil cells may be wound in the same anti-clockwise direction, while the inner coil portions of the first and second coil cells may be wound in the same clockwise direction.

FIG. 12C depicts a coupler 1240 comprising a first coil cell 1242 and a second coil cell 1244 connected in series to the first coil cell 1242 via a connector portion 1246, whereby the first and second coil cells have different coil configurations (opposite anti-directional coil section configuration), or in other words, have opposite winding directions (i.e., wound in the opposite directions). For example, the outer coil portions of the first and second coil cells may be wound in anti-clockwise and clockwise directions, respectively, while the inner coil portions of the first and second coil cells may be wound in clockwise and anti-clockwise directions, respectively.

FIG. 12D depicts a coupler 1260 comprising a first coil cell 1262 and a second coil cell 1264 connected in parallel to the first coil cell 1262 via a connector portion 1266 (two connector portions in FIG. 12D), whereby the first and second coil cells have the same coil configuration. For example, the outer coil portions of the first and second coil cells may be wound in the same anti-clockwise direction, while the inner coil portions of the first and second coil cells may be wound in the same clockwise direction.

Accordingly, various embodiments of the present invention provide a coupler (or coupler structure) which enhances the wireless power transfer performance and/or reduces magnetic flux leakage, thereby enabling a reduction in the EMF shielding efforts while satisfying the guidelines provided by ICNIRP. The coupler has also widened up the effective power transfer area (e.g., charging area/zone) as the coupler advantageously improves coil misalignment performances, thereby providing good coupling coefficient even when there is a mismatch of lateral and angular conditions.

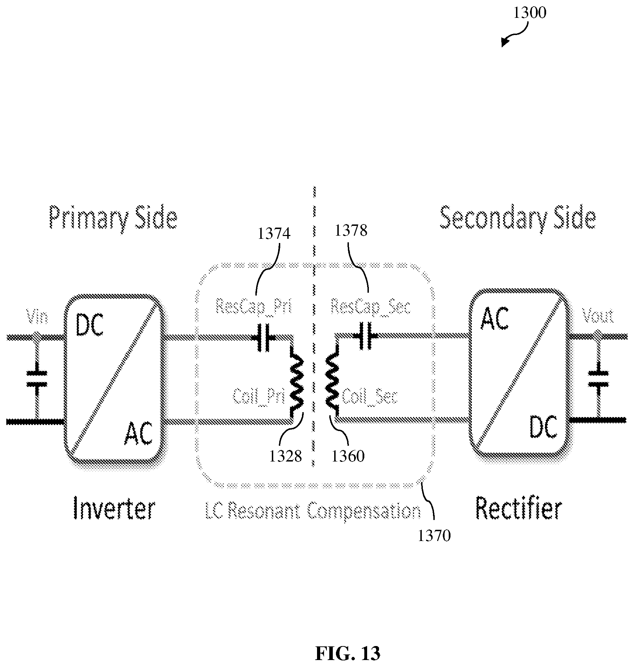

The coupler as described herein according to various embodiments may be implemented in a wireless power transmitter and/or a wireless power receiver of a wireless power transfer system, such as shown in FIG. 7, thereby enabling the wireless power transfer system (e.g., wireless power charging system) to be more efficient with improved coil misalignment tolerance capability. By way of an example only and without limitation, FIG. 13 depicts an example wireless power transfer system 1300 according to various example embodiments of the present invention. The coil of the coupler according to various embodiments may be employed in or implemented as power transfer coils (e.g., as a transmitter coil 1328 (Coil_Pri) and a receiver coil 1360 (Coil_Sec)) in a non-resonance circuit or in a resonant compensation circuit, such as but not limited to a LC resonant compensation circuit 1370 of the wireless power transfer system 1300 shown in FIG. 13. In the LC resonant compensation circuit 1370, the transmitter coil 1328 and the receiver coil 1360 may each be connected in series (shown in FIG. 13) or in parallel (not shown) with a resonant capacitor 1374 (ResCap_Pri), 1378 (ResCap_Sec) at respective side, thus forming distinct resonant compensation structures, such as series-series (shown in FIG. 13), series-parallel, parallel-series or parallel-parallel topologies. Accordingly, the coil configuration according to various embodiments of the present invention advantageously enables the wireless power transfer system to be employed in a wider range of applications, from low power applications (e.g., smartphones, cameras and sensors) to high power applications (e.g., robots, automatic guided vehicles and electric mobility devices).

Coupler leakage inductance is often caused by leakage flux which may be referred to the magnetic flux that does not magnetically link or couple the primary winding to the secondary winding as it is dispersed or 'escaped' through the air. In this regard, the design/configuration (e.g., geometries) of coils affects leakage flux and various designs/configurations of coils (or couplers including coil(s)) described hereinbefore according to various embodiments have been found to advantageously reduce magnetic flux leakage. For illustration purpose only and to demonstrate the effectiveness of couplers configured according to various embodiments of the present invention, various experimental results and observations will be described below using example coil parameters/dimensions. It will be appreciated that the present invention is not limited to such example coil parameters/dimensions. For example, various experiments were conducted to examine the magnetic flux leakage and misalignment tolerance associated with various combinations of primary (transmitter) and secondary (receiver) coil configurations (coil topologies).

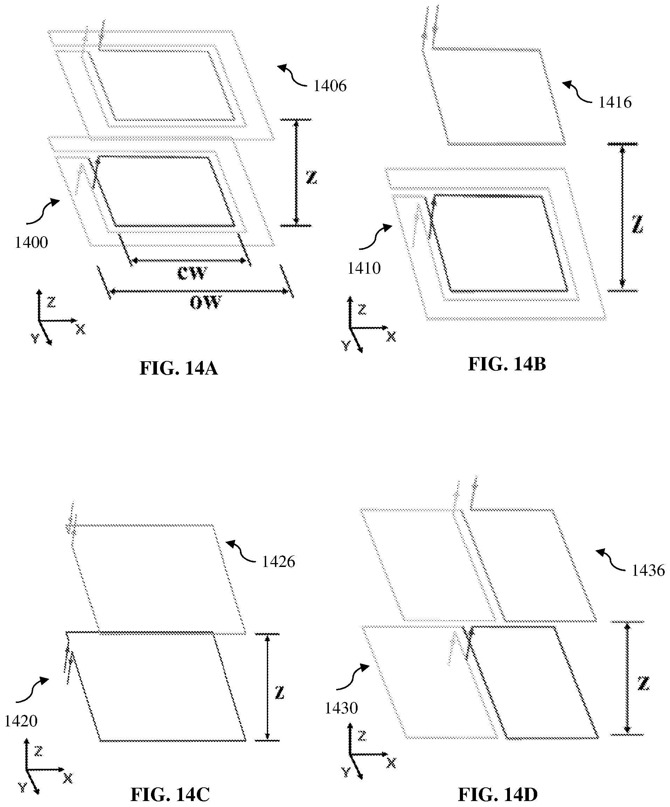

By way of examples only, FIGs. 14A to 14D depict four exemplary combinations of primary and secondary coupler configuration or topologies (or coil configurations or topologies) which were evaluated in various experiments conducted. In FIGs. 14A to 14D, the bottom coil shown is the primary coil and the top coil shown is the secondary coil. In FIG. 14A ("Combination I'), both the primary and secondary coils 1400, 1406 are configured according to embodiments of the present invention (as described with reference to FIG. 10A hereinbefore), which may hereinafter and in Tables 1 to 3 be each referred to as the "X-coil" or the present coil. In FIG. 14B ("Combination II"), the primary coil 1410 is configured according to embodiments of the present invention (as described with reference to FIG. 10A hereinbefore) (the present coil) and the secondary coil 1416 is a conventional unipolar square coil. In FIG. 14C ("Combination III"), both the primary and secondary coils 1420, 1426 are a conventional unipolar square coil. In FIG. 14D ("Combination IV"), both the primary and secondary coils 1430, 1436 are a conventional bipolar double D (DD) coil. In FIGs. 14A to 14D, "z" denotes the air gap distance between the primary and secondary coils.

In various experiments conducted, the present coil in Combinations I and II with different ratio of center width (CW) to outer width (OW) were evaluated. For simplicity and without limitation, all the coil topologies in FIGs. 14A to 14D were wound in a single turn winding as illustrated, without any inclusion of magnetic materials or shielding. The primary and secondary coils were perfectly center aligned with the same air gap distance ("z") of 75 mm in the z-axis maintained throughout (i.e., along the x-axis and y-axis (the xy plane)) between the primary and secondary coils. By doing so, for example, the magnetic leakage flux can be fairly measured at different points along the x-axis direction from the center of the coil based on the same height (z-axis) of 37.5 mm (half of the air gap distance) for different combinations and y-axis of 0 mm.

FIG. 15 shows a table (Table I) for magnetic leakage flux evaluation for Combinations I to IV having various coil dimensions/parameters (as shown in the table), whereby the air gap ("z") between the primary and secondary coils is 75 mm. FIG. 16 shows a table (Table II) for magnetic leakage flux evaluation for Combinations I to IV having various coil dimensions/parameters (as shown in the table), whereby the magnetic leakage flux measurements were taken at an x-axis distance of 600 mm from the center of the coil and for an air gap ("z") between the primary and secondary coils of 50 mm (smaller air gap distance) and 100 mm (wider air gap distance). FIG. 17 shows a table (Table III) for coil misalignment evaluation for Combinations I to IV having various coil dimensions/parameters (as shown in the table), whereby the air gap ("z") between the primary and secondary coils is 75 mm. In Tables I to III, "CW" and "OW" denote the center width and outer width, respectively, for the present coil, and CW:OW denotes the ratio of the inner coil portion and the outer coil portion of the present coil based on the overall dimension (external or outer dimension). In Combination II, the dimensions of the secondary coil (conventional unipolar square coil) are the same as the dimensions (CW) of the inner coil portion of the primary coil (present coil). In Table I, the magnetic leakage flux was measured at different x-axis positions from the center of the coil while based on the same z-axis height of 37.5 mm (half of the air gap distance z = 75 mm) and y = 0 mm. In Tables I and II, all magnetic leakage flux values were normalized according to Combination III at x = 600 mm and z = 37.5 mm with an air gap distance z = 75 mm. In addition, in Table I, the measured values of magnetic leakage flux outside the primary coil dimensions are highlighted in bold. In Table II, the same parameters, such as leakage flux at x = 600 mm, coupling coefficients, self-inductances and mutual inductances were obtained/measured for different air gap distances of 50 mm and 100 mm.

In addition, the overall dimensions (external or outer dimensions) of each coil in Combinations I to IV were configured as 400 mm by 400 mm except for the dimensions of the secondary coil (conventional unipolar square coil) in Combination II which was fixed to the dimension of CW of the primary coil (present coil). Furthermore, as an additional comparison, the dimensions of the secondary coil (conventional unipolar square coil) in Combination II was made to be 400 mm by 400 mm while the dimension of the primary coil (present coil) was increased to 500 mm by 500 mm (to maintain the same CW:OW ratio of 80:20).

Various experimental results and observations for evaluating magnetic leakage flux and coil misalignment tolerance will now be described below in relation to Combinations I to IV with reference to Tables I to III.

First, in relation to magnetic leakage flux evaluation, from Tables I and II for Combination I, it can be observed that as the inner coil portion area increases (higher CW:OW ratio), the coupling coefficient (k) decreases, which may be because of (i) both increasing coil length and increasing self-inductances of both primary and secondary coils and/or (ii) decreasing mutual inductances. It can also be observed that mutual inductances are the highest at CW:OW of 50:50, which is due to the equivalence magnetic reluctance in both inner coil portion area (e.g., corresponding to the first area 1020 shaded in FIG. 10D) and outer coil portion area (e.g., corresponding to the second area 1022 shaded in FIG. 10F) of the primary and secondary coils. For example, magnetic reluctance depends on the area of each coil portion as well as the coil winding length of the respective coil portion. It can further be observed that leakage flux decreases with the increasing area of the inner coil portion. Overall, the leakage flux achieved by Combination I was observed to be lowest compared to the other combinations of coil topologies (Combination II to IV).

From Tables I and II for Combination II, it can be observed that as the inner coil portion area increases (higher CW:OW ratio) the magnetic coupling coefficient (k) increases (contrary to the performance of Combination I), which is mainly due to increasing mutual inductances. For Combination II, the magnetic reluctance is affected by or depends on the area of the inner coil portion of the present coil and the area of the secondary coil. For example, as both the inner portion area of the present coil and the area of the secondary coil increase (higher CW:OW ratio), it can be observed that the magnetic coupling coefficient increases, which results in the magnetic reluctance decreasing. Therefore, mutual inductance increases as magnetic reluctance decreases with the increasing areas of the inner coil portion of the primary coil and the secondary coil. It can also be observed that leakage flux decreases when the area of the outer coil portion of the primary coil decreases. However, when the area of the outer coil portion of the primary coil becomes too small, the leakage flux cannot be cancelled out (nullified) or reduced.

From Tables I and II, in relation to variations of the air gap distance, it can be observed that leakage flux increases when the air gap is larger (e.g., 100 mm) and decreases when the air gap distance is smaller (e.g., 50 mm). The leakage flux is reduced using the present coil and even much lower using the Combination II as compared to the conventional unipolar square coils and bipolar DD coil in Combinations III and IV, respectively. It can also be observed that mutual inductances are also reduced when the air gap increases, thus affecting the magnetic coupling coefficients (k). However, the present coil can achieve relatively good mutual inductances, for example, based on comparisons amongst Combinations I, III and IV where both the primary and secondary coils have the same coil topologies.

Misalignment of coils are much likely to occur in practical wireless power transfer system as the secondary coil (receiver coil) attached to, for example, a vehicle may not always be perfectly aligned with the primary coil (transmitter coil), for example, installed at a fixed location. Hence, alignment of the primary and secondary coils greatly depends on the positioning accuracy of the vehicle (e.g., automated guided vehicle and electric vehicle, and so on) when stationed for wireless charging. In this regard, the performances of the same four different coil topology combinations (Combinations I to IV) were also investigated under various misalignment conditions, such as vertical misalignment (variation of air gap distance in z-axis direction), lateral misalignment (displacement in x-axis or y-axis direction) and diagonal misalignment (displacement in both x-axis and y-axis directions). The vertical misalignment may be analysed from Tables I and II whereby the air gap distances were varied by placing the secondary coil at 50 mm, 75 mm and 100 mm away in z-axis direction from the primary coil.

For the lateral misalignment evaluation, the secondary coil of the respective mentioned combinations was shifted horizontally either along x-axis or y-axis direction of 100 mm (one-quarter of coil dimension) and 200 mm (half of coupler coil) away from the center axis of the primary coil while maintaining parallel alignment to the primary coil in the z-direction. The diagonal misalignment evaluation shares a similar approach to the lateral misalignment evaluation, just that the secondary coil was shifted diagonally in both x-axis and y-axis directions. The misalignment evaluations according to various example embodiments were carried out considering the worst-case condition of misalignment near half the length or width of the coil dimension (e.g. 200 mm in the example) in either x-axis or y-axis (lateral) or both x-axis and y-axis (diagonal).

In misalignment evaluations according to various example embodiments, with respect to Combinations I and II, the ratio CW:OW of 30:70 and 80:20 for Combination I and CW:OW of 80:20 with outer width of 400 mm and 500 mm for Combination II were considered and evaluated against the corresponding configurations of Combinations III and IV. The measured values of the magnetic coupling coefficients, mutual inductances and self-inductances for vertical misalignment can be referred to in Tables I and II, while lateral and diagonal misalignment conditions are presented in the Table III.

In the interest of conducting a fair evaluation of coil performances under various misalignment conditions, mutual inductances are the prime factor considered rather than the magnetic coupling coefficients (*k*) as the *k* value (*k =* M / (Lpri × Lsec)^{0.5}) greatly depends on the mutual inductance (M) and the inverse proportionally to the square root of both primary (Lpri) and secondary (Lsec) self-inductances. Since these self-inductances (Lpri and Lsec) depend primarily on both geometries and length of the coils and do not vary much in any misalignment conditions, therefore it may be inaccurate to evaluate solely based on the coupling coefficient values.

In relation to vertical misalignment, Combination IV was found to have relatively highest mutual inductances as compared to the other combinations when the coils are perfectly aligned, followed by Combination I (for present coils with CW:OW at 30:70) and Combination II (for the present coil (primary coil) with CW:OW at 80:20) having an outer width of 500 mm. However, the change rate of mutual inductances is largest for Combination IV when the air gap distance increases compared to the other combinations. On the other hand, Combination III has the lowest change rate of mutual inductances. Nevertheless, it can also be observed that Combination II including the present coil having an outer width of 500 mm has better mutual inductances compared to Combination III (conventional unipolar square coils) despite having the same dimension of square coils.

In relation to lateral misalignment, Combination IV was found to have good misalignment tolerance in y-axis but not in x-axis directions while the present coil from both Combinations I and II were shown to have achieved good misalignment tolerance capability in both x-axis and y-axis directions, similar to the conventional unipolar square coils in Combination III. Among different design configurations of the present coil in terms of ratio CW:OW or coil dimension, Combination II with the outer width of the present coil being 500 mm was shown to have achieved comparably similar performances with Combination III as the square coils share similar dimensions in both combinations.

In relation to diagonal misalignment, none of the coil combinations was found to work very well in event when the secondary coil was shifted away in both x-axis and y-axis of 200 mm from the primary coupler as the results showed that the measured mutual inductances are very low (to zero or negative values). However, Combination II (for CW:OW at 80:20 with outer width of 500 mm) and Combination III have relatively higher mutual inductances as compared to the other combinations when both were shifted diagonally in x-axis and y-axis of 100 mm. Even though both combinations share the same square coil dimension, but Combination II may not perform the same as Combination III. This is mainly due to the anti-directional winding configuration of the present coil whereby the outer coil portion area induced magnetic flux opposite to the inner coil portion area, thus affecting the net magnetic flux flowing to the secondary square coil.

Based on the experimental results, various example embodiments may provide Combination II for a number of reasons, including practical design considerations, reduction of leakage flux, and good misalignment tolerance capability.

In relation to practical design considerations, for example, based on the same dimension (400 mm by 400 mm) of secondary square coil in Combination II with the dimension of coils in Combinations III and IV, Combination II achieves good mutual inductances values compared to Combination III and IV. However, the values of primary and secondary self-inductances are different for Combination II, whereas Combinations III and IV have equivalent primary and secondary self-inductances. Considering the practical implementation of coil, the secondary self-inductance may be designed to be smaller than the primary self-inductance in order to achieve the required output gain ratios. Therefore, the mutual inductances and coupling coefficients of Combinations III and IV may be even lower or poorer than Combination II. As a result, Combination II offers flexibility in coil design that makes the coupler more practicably implementable for wireless power transfer system, compared to Combination III and IV.

In relation to reduction of leakage flux, as shown, leakage flux is reduced using the present coil by comparing Combinations I, III and IV based on the same coil dimensions of 400 mm by 400 mm and same self-inductances of primary and secondary couplers. Hence, the leakage flux can also be greatly reduced using Combination II with the inclusion of the present coil as the primary side coil when compared to Combinations III and IV in the case that both combinations have the same output gain ratios as Combination II.

In relation to misalignment tolerance capability, even though Combination II (CW:OW at 80:20) with outer width 500 mm cannot achieve mutual inductances as high as Combination III based on same square coupler dimension, but Combination II is shown to have successfully inherited the attractive misalignment tolerance capability from Combination III to overcome the misalignment issues faced by the conventional bipolar DD coil in Combination IV. Considering in the event of designing practically the coils with the required output gain ratios (different primary and secondary self-inductances), Combination II is able to perform even better or equivalently good as Combination III.

Accordingly, the discussed results have demonstrated that the present coil (e.g., when employed in both a wireless power transmitter and a wireless power receiver (e.g., as in Combination I) or when employed in any one of a wireless power transmitter and a wireless power receiver (e.g., as in Combination II)) offers an effective solution for wireless power transfer system with enhanced performances, such as when compared to the conventional unipolar couplers and bipolar DD couplers as illustrative examples. For example, the present coil has been found to advantageously (i) reduce the leakage flux, thus allowing the coil size and weight to be more compact with the reduced or minimum efforts of EMF shielding required whilst satisfying the guidelines provided by ICNIRP concerning EMF exposure, and (ii) increase the misalignment tolerance capability which widens up the effective charging zone area.

While embodiments of the present invention have been particularly shown and described with reference to specific embodiments, it should be understood by those skilled in the art that various changes in form and detail may be made therein without departing from the scope of the present invention as defined by the appended claims. The scope of the present invention is thus indicated by the appended claims.

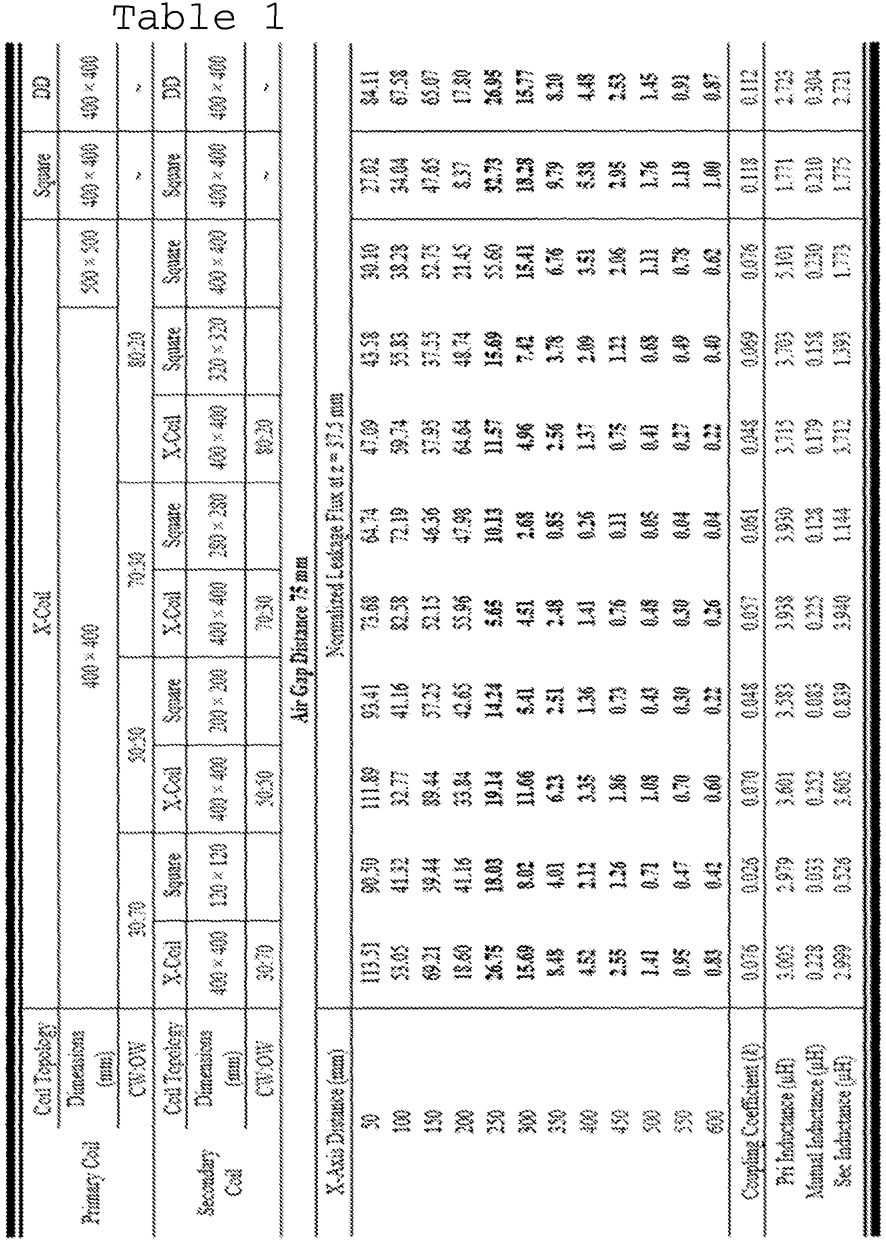

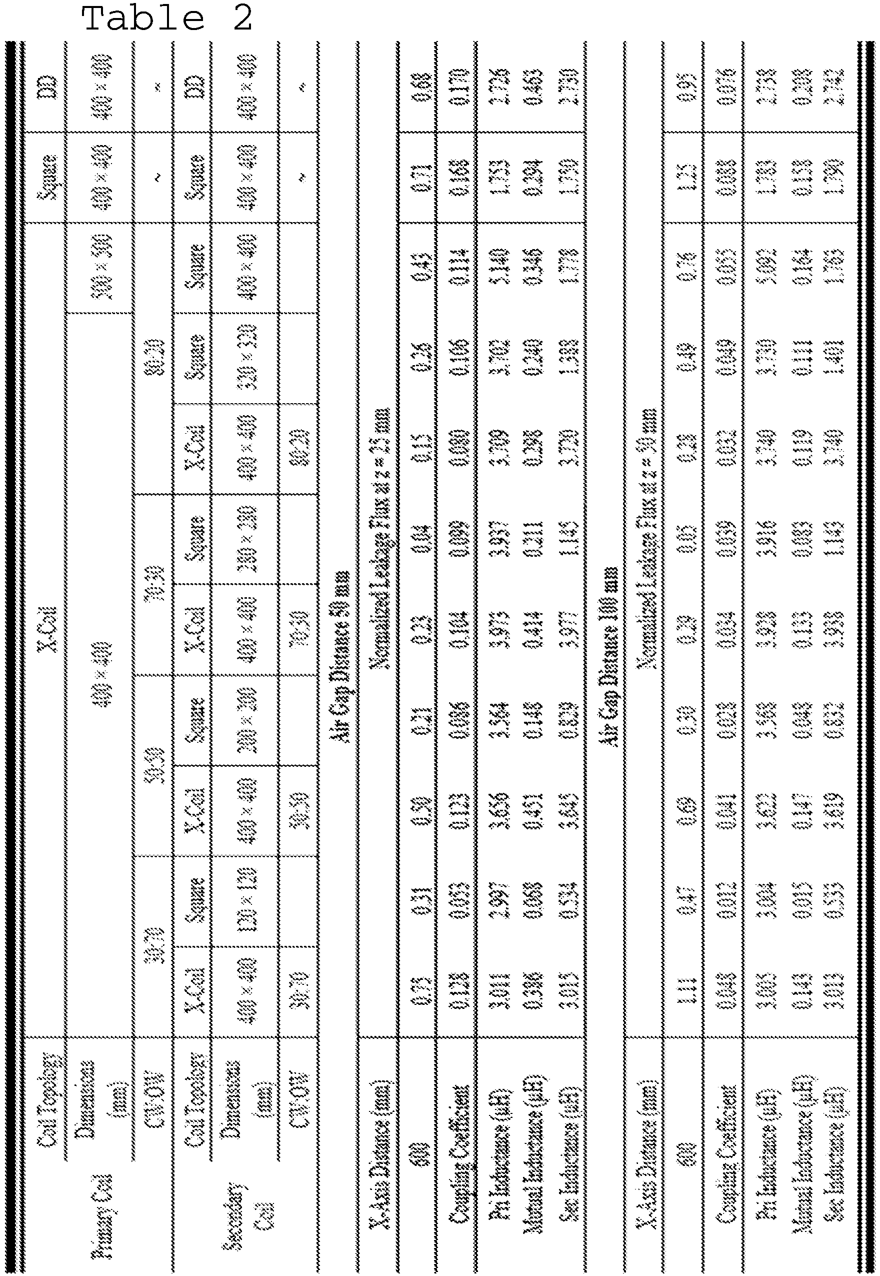

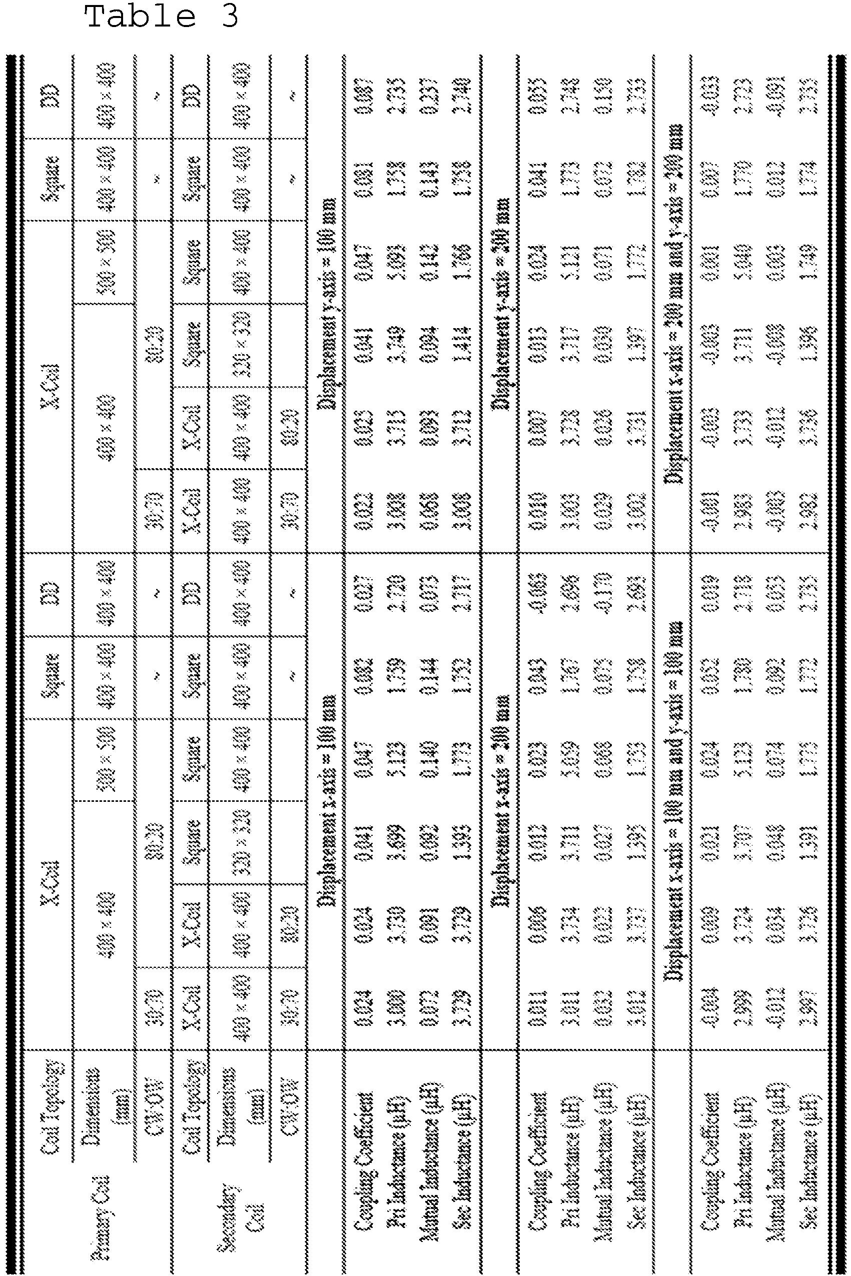

## Claims

1. A coupler (404, 1200) for wireless power transfer, the coupler comprising:
a coil configured for wireless power transfer based on magnetic induction, the coil comprising a plurality of coil portions, the plurality of coil portions comprising a first coil portion (408, 1216) and a second coil portion (412, 1214) wound in opposite directions, wherein the first coil portion (408, 1216) is nested within the second coil portion (412, 1214) and defines a first area, the second coil portion (412, 1214) comprises a plurality of second winding loops and defines a second area;
the first coil portion (408, 1216) and the second coil portion (412, 1214) are configured that magnetic flux generated based on the first coil portion (408, 1216) flows through the first area and into the second area;
the coil is configured as a continuous winding; the first coil portion (408, 1216) is wound in a clockwise direction and the second coil portion (412, 1214) is wound in an anti-clockwise direction, or the second coil portion (412, 1214) is wound in a clockwise direction and the first coil portion (408, 1216)is wound in an anti-clockwise direction;
each of the plurality of second winding loops is a complete winding loop;
the first coil portion comprises more than one first winding loops, and the plurality of second winding loops are wound in an opposite direction to more than one the first winding loops;
wherein the first coil portion (408, 1216) forms magnetic flux for power transfer, and the second coil portion (412, 1214) forms a closed-loop area for forming magnetic flux containing magnetic leakage;
a first anti-directional coil section (416, 1212) is formed by the first coil portion (408, 1216) and the second coil portion (412, 1214); **characterised in that** the coil further comprises one or more additional anti-directional coil sections;
the additional anti-directional coil section (516, 1202) comprising a third coil portion (508, 1206) and a fourth coil portion (512, 1204), wherein the third coil portion is nested within the forth coil portion;
the first anti-directional coil section (416, 1212) is nested within one or more of the additional anti-directional coil sections (516, 1202).

2. The coupler (1000) according to claim 1, wherein the coil is configured to have a planar spiral configuration,
wherein preferably, the first coil portion (1008) and the second coil portion (1012) are each configured to have a unipolar coil configuration, and the coil has a multi-polar coil configuration.

3. The coupler (1000) according to any one of claims 1 to 2, wherein the coil forms a first coil cell, and wherein the coupler further comprises one or more additional coil cells connected to the first coil cell, each the additional coil cell comprising a second coil configured for wireless power transfer based on magnetic induction, the second coil comprising a plurality of coil portions comprising a fifth coil portion and a sixth coil portion wound in opposite directions, wherein the fifth coil portion is nested within the sixth coil portion.

4. The coupler (1000) according to any one of claims 1 to 3, further comprising a resonance capacitor connected to the coil in series or in parallel to form a resonance circuit configured for resonant inductive power transfer,
wherein preferably, the coupler (1000) is a transmitter coupler configured to receive a time-varying current from a power source connected thereto for generating a magnetic field to perform wireless power transfer with a receiver coupler over an air gap based on magnetic induction, or
wherein preferably, the coupler (1000) is a receiver coupler configured to couple with a magnetic field generated from a transmitter coupler to induce a current in the receiver coupler for supplying power to an electrical load connected to the receiver couple to perform wireless power transfer with the transmitter coupler over an air gap based on magnetic induction.

5. A system for wireless power transfer comprising:
a wireless power transmitter comprising:
a power source configured to generate a time-varying current; and
a transmitter coupler connected to the power source, wherein the transmitter coupler is configured to receive the time-varying current from the power source for generating a magnetic field to perform wireless power transfer with a receiver coupler over an air gap based on magnetic induction; and
a wireless power receiver comprising:
an electrical load; and
the receiver coupler connected to the electrical load, wherein the receiver coupler is configured to couple with the magnetic field generated from the transmitter coupler to induce a current in the receiver coupler for supplying power to the electrical load connected to the receiver coupler to perform wireless power transfer with the transmitter coupler over the air gap based on magnetic induction,
wherein at least one of the receiver coupler and the transmitter coupler is a coupler (1000) according to any one of claims 1 to 3, and the wireless power transmitter and the wireless power receiver are separated by the air gap.

6. The system according to claim 5, wherein the receiver coupler and the transmitter coupler are each a coupler (1000) according to any one of claims 1 to 3, or
wherein one of the receiver coupler and the transmitter coupler is a coupler (1000) according to any one of claims 1 to 3, and the other of the receiver coupler and the transmitter coupler is a coupler configured to have a unipolar configuration.

7. A method of manufacturing a coupler (404, 1200) for wireless power transfer, the method comprising a plurality of coil portions, the plurality of coil portions comprising a first coil portion and a second coil portion wound in opposite directions, wherein
the first coil portion is nested within the second coil portion and defines a first area,
the second coil portion comprises a plurality of second winding loops and defines a second area;
the first coil portion and the second coil portion are configured that magnetic flux generated based on the first coil portion flows through the first area and into the second area;
**characterized in that**
each of the plurality of second winding loops is a complete winding loop;
the first coil portion comprises more than one first winding loops, and the plurality of second winding loops are wound in an opposite direction to more than one the first winding loops;
wherein the first coil portion forms magnetic flux for power transfer, and the second coil portion forms a closed-loop area for forming magnetic flux containing magnetic leakage; a first anti-directional coil section (416, 1212) is formed by the first coil portion (408, 1216) and the second coil portion (412, 1214); and the coil further comprises one or more additional anti-directional coil sections;
the additional anti-directional coil section (516, 1202) comprising a third coil portion (508, 1206) and a fourth coil portion (512, 1204), wherein the third coil portion is nested within the forth coil portion;
the first anti-directional coil section (416, 1212) is nested within one or more the additional anti-directional coil section (516, 1202); the coil is configured as a continuous winding;
the first coil portion is wound in a clockwise direction and the second coil portion is wound in an anti-clockwise direction, or the second coil portion is wound in a clockwise direction and the first coil portion is wound in an anti-clockwise direction.

8. The method according to claim 7, wherein the coil is configured to have a planar spiral configuration,
wherein preferably, the first coil portion (1008) and the second coil portion (1012) are each configured to have a unipolar coil configuration, and the coil has a multi-polar coil configuration.

9. The method according to any one of claims 7 to 8, wherein the coil forms a first coil cell, and the method further comprises configuring one or more additional coil cells connected to the first coil cell, each the additional coil cell comprising a second coil configured for wireless power transfer based on magnetic induction, the second coil comprising a plurality of coil portions comprising a fifth coil portion and a sixth coil portion wound in opposite directions, wherein the fifth coil portion is nested within the sixth coil portion.

10. The method according to any one of claims 7 to 9, further comprising providing a resonance capacitor connected to the coil in series or in parallel to form a resonance circuit configured for resonant inductive power transfer,
wherein preferably, the coupler (1000) is a transmitter coupler configured to receive a time-varying current from a power source connected thereto for generating a magnetic field to perform wireless power transfer with a receiver coupler over an air gap based on magnetic induction, or
wherein preferably, the coupler (1000) is a receiver coupler configured to couple with a magnetic field generated from a transmitter coupler to induce a current in the receiver coupler for supplying power to an electrical load connected to the receiver couple to perform wireless power transfer with the transmitter coupler over an air gap based on magnetic induction.

11. A method of wireless power transfer comprising:
generating, by a power source at a wireless power transmitter, a time-varying current; and
receiving, by a transmitter coupler at the wireless power transmitter connected to the power source, the time-varying current from the power source for generating a magnetic field to perform wireless power transfer with a receiver coupler over an air gap based on magnetic induction;
coupling, by the receiver coupler at a wireless power receiver connected to an electrical load, with a magnetic field generated from the transmitter coupler to induce a current in the receiver coupler to perform wireless power transfer with the transmitter coupler over the air gap based on magnetic induction; and
supplying, by the receiver coupler at the wireless power receiver, power to the electrical load connected thereto based on the current induced therein,
wherein at least one of the receiver coupler and the transmitter coupler is a coupler (1000) according to any one of claims 1 to 4, and the wireless power transmitter and the wireless power receiver are separated by the air gap.

## Patentansprüche

1. Koppler (404, 1200) für die drahtlose Stromübertragung, wobei der Koppler umfasst:
eine Spule, die für die drahtlose Stromübertragung auf der Grundlage magnetischer Induktion ausgelegt ist, wobei die Spule eine Vielzahl von Spulenabschnitten umfasst, wobei die Vielzahl von Spulenabschnitten ein erstes Spulenteil (408, 1216) und einen zweiten Spulenteil (412, 1214) umfasst, die in entgegengesetzte Richtungen gewickelt sind, wobei
das erste Spulenteil (408, 1216) im zweiten Spulenteil (412, 1214) eingebettet ist und einen ersten Bereich definiert,
der zweite Spulenteil (412, 1214) eine Vielzahl von zweiten Windungsschleifen umfasst und einen zweiten Bereich definiert;
der erste Spulenteil (408, 1216) und der zweite Spulenteil (412, 1214) so konfiguriert sind, dass der auf der Grundlage des ersten Spulenteils (408, 1216) erzeugte Magnetfluss durch den ersten Bereich und in den zweiten Bereich fließt;
die Spule ist als kontinuierliche Wicklung ausgebildet; der erste Spulenteil (408, 1216) ist im Uhrzeigersinn gewickelt und der zweite Spulenteil (412, 1214) ist gegen den Uhrzeigersinn gewickelt, oder der zweite Spulenteil (412, 1214) im Uhrzeigersinn gewickelt ist und das erste Spulenteil (408, 1216) gegen den Uhrzeigersinn gewickelt ist;
jede der mehreren zweiten Wicklungsschleifen eine vollständige Windungsschleife ist; der erste Spulenteil umfasst mehr als eine erste Windungsschleife und die mehrere zweiten Windungsschleifen in einer zu mehr als einer der ersten Windungsschleifen entgegengesetzten Richtung gewickelt sind;
wobei der erste Spulenteil (408, 1216) einen Magnetfluss zur Energieübertragung bildet und der zweite Spulenteil (412, 1214) einen geschlossenen Bereich zur Bildung eines Magnetflusses bildet, der magnetische Streuung enthält;
ein erster gegenläufiger Spulenteil (416, 1212) durch das erste Spulenteil (408, 1216) und den zweiten Spulenteil (412, 1214) gebildet wird;
**dadurch gekennzeichnet, dass** die Spule ferner einen oder mehrere zusätzliche gegenläufige Spulenteile umfasst;
wobei das zusätzliche gegenläufige Spulenteil (516, 1202) ein drittes Spulenteil (508, 1206) und ein vierter Spulenteil (512, 1204) umfasst, wobei das dritte Spulenteil in das vierte Spulenteil eingebettet ist;
der erste gegenläufige Spulenteil (416, 1212) in einem oder mehreren der zusätzlichen gegenläufigen Spulenteile (516, 1202) verschachtelt ist.

2. Koppler (1000) nach Anspruch 1, wobei die Spule so konfiguriert ist, dass sie eine planare Spiralkonfiguration aufweist,
wobei vorzugsweise das erste Spulenteil (1008) und das zweite Spulenteil (1012) jeweils so ausgebildet sind, dass sie eine unipolare Spulenkonfiguration aufweisen, und die Spule eine multipolare Spulenkonfiguration aufweist.

3. Koppler (1000) nach einem der Ansprüche 1 bis 2, wobei die Spule eine erste Spulenzelle bildet und wobei der Koppler ferner eine oder mehrere zusätzliche Spulenzellen umfasst, die mit der ersten Spulenzelle verbunden sind, wobei jede der zusätzlichen Spulenzellen eine zweite Spule umfasst, die für die drahtlose Stromübertragung auf der Grundlage magnetischer Induktion ausgelegt ist, wobei die zweite Spule eine Vielzahl von Spulenteilen umfasst, die einen fünften Spulenteil und einen sechsten Spulenteil umfassen, die in entgegengesetzte Richtungen gewickelt sind, wobei der fünfte Spulenteil in den sechsten Spulenteil eingebettet ist.

4. Koppler (1000) gemäß einem der Ansprüche 1 bis 3, der ferner einen Resonanzkondensator umfasst, der mit der Spule in Reihe oder parallel geschaltet ist, um eine Resonanzschaltung zu bilden, die für die resonante induktive Stromübertragung ausgelegt ist,
wobei der Koppler (1000) vorzugsweise ein Senderkoppler ist, der so konfiguriert ist, dass er einen zeitlich variierenden Strom von einer damit verbundenen Stromquelle empfängt, um ein Magnetfeld zu erzeugen, um eine drahtlose Stromübertragung mit einem Empfängerkoppler über einen Luftspalt auf der Grundlage von magnetischer Induktion durchzuführen, oder
wobei der Koppler (1000) vorzugsweise ein Empfängerkoppler ist, der so konfiguriert ist, dass er mit einem von einem Senderkoppler erzeugten Magnetfeld in Wechselwirkung tritt, um einen Strom im Empfängerkoppler zu induzieren, der eine an den Empfängerkoppler angeschlossene elektrische Last mit Energie versorgt, um eine drahtlose Stromübertragung mit dem Senderkoppler über einen Luftspalt auf der Grundlage magnetischer Induktion durchzuführen.

5. System zur drahtlosen Stromübertragung, umfassend:
einen drahtlosen Stromsender, der umfasst:
eine Stromquelle, die so konfiguriert ist, dass sie einen zeitlich variierenden Strom erzeugt; und
einen mit der Stromquelle verbundenen Senderkoppler, wobei der Senderkoppler so konfiguriert ist, dass er den zeitlich variierenden Strom von der Stromquelle empfängt,
um ein Magnetfeld zu erzeugen, um eine drahtlose Stromübertragung mit einem Empfängerkoppler über einen Luftspalt auf der Grundlage von magnetischer Induktion durchzuführen; und
einen drahtlosen Stromempfänger, der umfasst:
eine elektrische Last; und
den mit der elektrischen Last verbundenen Empfängerkoppler, wobei der Empfängerkoppler so konfiguriert ist, dass er sich mit dem vom Senderkoppler erzeugten Magnetfeld koppelt, um einen Strom im Empfängerkoppler zu induzieren, um die mit dem Empfängerkoppler verbundene elektrische Last mit Energie zu versorgen, um eine drahtlose Stromübertragung mit dem Senderkoppler über den Luftspalt auf der Grundlage magnetischer Induktion durchzuführen,
wobei mindestens einer der Empfängerkoppler und der Senderkoppler ein Koppler (1000) gemäß einem der Ansprüche 1 bis 3 ist und der drahtlose Stromsender und der drahtlose Stromempfänger durch den Luftspalt voneinander getrennt sind.

6. System nach Anspruch 5, wobei der Empfängerkoppler und der Senderkoppler jeweils ein Koppler (1000) gemäß einem der Ansprüche 1 bis 3 sind, oder
wobei entweder der Empfängerkoppler oder der Senderkoppler ein Koppler (1000) gemäß einem der Ansprüche 1 bis 3 ist und der jeweils andere von Empfängerkoppler und Senderkoppler ein Koppler ist, der so konfiguriert ist, dass er eine unipolare Konfiguration aufweist.

7. Verfahren zur Herstellung eines Kopplers (404, 1200) für die drahtlose Stromübertragung, wobei das Verfahren eine Vielzahl von Spulenabschnitten umfasst, wobei die Vielzahl von Spulenabschnitten einen ersten Spulenteil und einen zweiten Spulenteil umfasst, die in entgegengesetzte Richtungen gewickelt sind, wobei der erste Spulenteil im zweiten Spulenteil eingebettet ist und einen ersten Bereich definiert,
der zweite Spulenteil eine Vielzahl von zweiten Windungsschleifen umfasst und einen zweiten Bereich definiert;
der erste Spulenteil und der zweite Spulenteil so konfiguriert sind, dass der auf der Grundlage des ersten Spulenteils erzeugte Magnetfluss durch den ersten Bereich und in den zweiten Bereich fließt;
**dadurch gekennzeichnet, dass**
jede der mehreren zweiten Wicklungsschleifen eine vollständige Windungsschleife ist; der erste Spulenteil umfasst mehr als eine erste Windungsschleife und die mehrere zweiten Windungsschleifen in einer zu mehr als einer der ersten Windungsschleifen entgegengesetzten Richtung gewickelt sind;
wobei der erste Spulenteil einen Magnetfluss zur Energieübertragung bildet und der zweite Spulenteil einen geschlossenen Bereich zur Bildung eines Magnetflusses bildet, der magnetische Streuung enthält;
ein erster gegenläufiger Spulenteil (416, 1212) durch das erste Spulenteil (408, 1216) und den zweiten Spulenteil (412, 1214) gebildet wird; und die Spule ferner einen oder mehrere zusätzliche gegenläufige Spulenteile umfasst;
wobei der zusätzliche gegenläufige Spulenteil (516, 1202) ein drittes Spulenteil (508, 1206) und ein vierter Spulenteil (512, 1204) umfasst, wobei das dritte Spulenteil in das vierte Spulenteil eingebettet ist;
der erste gegenläufige Spulenteil (416, 1212) in einem oder mehreren der zusätzlichen gegenläufigen Spulenteile (516, 1202) verschachtelt ist; die Spule als kontinuierliche Wicklung ausgebildet ist;
das erste Spulenteil im Uhrzeigersinn gewickelt ist und das zweite Spulenteil gegen den Uhrzeigersinn gewickelt ist, oder das zweite Spulenteil im Uhrzeigersinn gewickelt ist und das erste Spulenteil gegen den Uhrzeigersinn gewickelt ist.

8. Verfahren nach Anspruch 7, wobei die Spule so konfiguriert ist, dass sie eine planare Spiralkonfiguration aufweist,
wobei vorzugsweise das erste Spulenteil (1008) und der zweite Spulenteil (1012) jeweils so ausgebildet sind, dass sie eine unipolare Spulenkonfiguration aufweisen, und die Spule eine multipolare Spulenkonfiguration aufweist.

9. Verfahren nach einem der Ansprüche 7 bis 8, wobei die Spule eine erste Spulenzelle bildet und das Verfahren ferner das Ausbilden einer oder mehrerer zusätzlicher Spulenzellen umfasst, die mit der ersten Spulenzelle verbunden sind, wobei jede der zusätzlichen Spulenzellen eine zweite Spule umfasst, die für die drahtlose Stromübertragung auf der Grundlage magnetischer Induktion ausgelegt ist, wobei die zweite Spule eine Vielzahl von Spulenteilen umfasst, die einen fünften Spulenteil und einen sechsten Spulenteil umfassen, die in entgegengesetzte Richtungen gewickelt sind, wobei der fünfte Spulenteil in den sechsten Spulenteil eingebettet ist.

10. Verfahren nach einem der Ansprüche 7 bis 9, das ferner das Bereitstellen eines Resonanzkondensators ( ) umfasst, der mit der Spule in Reihe oder parallel geschaltet ist, um eine Resonanzschaltung zu bilden, die für die resonante induktive Stromübertragung ausgelegt ist,
wobei vorzugsweise der Koppler (1000) ein Senderkoppler ist, der so konfiguriert ist, dass er einen zeitlich variierenden Strom von einer damit verbundenen Stromquelle empfängt, um ein Magnetfeld zu erzeugen, um eine drahtlose Stromübertragung mit einem Empfängerkoppler über einen Luftspalt auf der Grundlage magnetischer Induktion durchzuführen, oder
wobei der Koppler (1000) vorzugsweise ein Empfängerkoppler ist, der so konfiguriert ist, dass er mit einem von einem Senderkoppler erzeugten Magnetfeld in Wechselwirkung tritt, um einen Strom im Empfängerkoppler zu induzieren, der eine an den Empfängerkoppler angeschlossene elektrische Last mit Energie versorgt, um eine drahtlose Stromübertragung mit dem Senderkoppler über einen Luftspalt auf der Grundlage magnetischer Induktion durchzuführen.

11. Verfahren zur drahtlosen Stromübertragung, umfassend:
Erzeugen eines zeitlich variierenden Stroms durch eine Stromquelle an einem drahtlosen Stromsender; und
Empfangen des zeitlich variierenden Stroms von der Stromquelle durch einen Senderkoppler an dem drahtlosen Stromsender, der mit der Stromquelle verbunden ist,
um ein Magnetfeld zu erzeugen, um eine drahtlose Stromübertragung mit einem Empfängerkoppler über einen Luftspalt auf der Grundlage von magnetischer Induktion durchzuführen;
Koppeln eines vom Senderkoppler erzeugten Magnetfelds durch den Empfängerkoppler an einem drahtlosen Stromempfänger, der mit einer elektrischen Last verbunden ist, um einen Strom im Empfängerkoppler zu induzieren, um eine drahtlose Stromübertragung mit dem Senderkoppler über den Luftspalt auf der Grundlage von magnetischer Induktion durchzuführen; und
Liefern von Energie durch den Empfängerkoppler am drahtlosen Stromempfänger an die damit verbundene elektrische Last auf der Grundlage des darin induzierten Stroms, wobei mindestens einer der Empfängerkoppler und der Senderkoppler ein Koppler (1000) gemäß einem der Ansprüche 1 bis 4 ist und der drahtlose Stromsender und der drahtlose Stromempfänger durch den Luftspalt voneinander getrennt sind.

## Revendications

1. Un coupleur (404, 1200) pour la transmission sans fil d'énergie, le coupleur comprenant :
une bobine conçue pour la transmission sans fil d'énergie sur la base de l'induction magnétique, ladite bobine comprenant une pluralité de sections de bobine, ladite pluralité de sections de bobine comprenant une première partie de bobine (408, 1216) et une deuxième partie de bobine (412, 1214) enroulées dans des directions opposées, dans lequel
la première partie de bobine (408, 1216) est intégrée dans la deuxième partie de bobine (412, 1214) et définit une première zone,
la deuxième partie de bobine (412, 1214) comprend une pluralité de deuxièmes boucles d'enroulement et définit une deuxième zone ;
la première partie de bobine (408, 1216) et la deuxième partie de bobine (412, 1214) sont configurées de telle sorte que le flux magnétique généré sur la base de la première partie de bobine (408, 1216) circule à travers la première zone et dans la deuxième zone ;
la bobine est réalisée sous la forme d'un enroulement continu ; la première partie de bobine (408, 1216) est enroulée dans le sens des aiguilles d'une montre et la deuxième partie de bobine (412, 1214) est enroulée dans le sens inverse des aiguilles d'une montre, ou la deuxième partie de bobine (412, 1214) est enroulée dans le sens des aiguilles d'une montre et la première partie de bobine (408, 1216) est enroulée dans le sens inverse des aiguilles d'une montre ;
chacune des multiples deuxièmes boucles d'enroulement est une boucle d'enroulement complète ;
la première partie de bobine comprend plus d'une première boucle d'enroulement et les multiples deuxièmes boucles d'enroulement sont enroulées dans une direction opposée à celle de plus d'une des premières boucles d'enroulement ;
la première partie de bobine (408, 1216) formant un flux magnétique pour le transfert d'énergie et la deuxième partie de bobine (412, 1214) formant une zone fermée pour la formation d'un flux magnétique comprenant une dispersion magnétique ;
une première partie de bobine à sens inverse (416, 1212) est formée par la première partie de bobine (408, 1216) et la deuxième partie de bobine (412, 1214) ;
**caractérisé en ce que** la bobine comprend en outre une ou plusieurs parties de bobine supplémentaires à sens inverse ;
la partie de bobine opposée supplémentaire (516, 1202) comprenant une troisième partie de bobine (508, 1206) et une quatrième partie de bobine (512, 1204), la troisième partie de bobine étant intégrée dans la quatrième partie de bobine ;
la première partie de bobine à sens inverse (416, 1212) est imbriquée dans une ou plusieurs des parties de bobine supplémentaires à sens inverse (516, 1202).

2. Le coupleur (1000) selon la revendication 1, dans lequel la bobine est configurée de manière à présenter une configuration en spirale plane,
dans lequel, de préférence, la première partie de bobine (1008) et la deuxième partie de bobine (1012) sont chacune conçues de manière à présenter une configuration de bobine unipolaire, et la bobine présente une configuration de bobine multipolaire.

3. Le coupleur (1000) selon l'une des revendications 1 à 2, dans lequel la bobine forme une première cellule de bobine et dans lequel le coupleur comprend en outre une ou plusieurs cellules de bobine supplémentaires reliées à la première cellule de bobine, chacune des cellules de bobine supplémentaires comprenant une deuxième bobine conçue pour la transmission sans fil d'énergie sur la base de l'induction magnétique, la deuxième bobine comprenant une pluralité de parties de bobine, comprenant une cinquième partie de bobine et une sixième partie de bobine qui sont enroulées dans des directions opposées, la cinquième partie de bobine étant intégrée dans la sixième partie de bobine.

4. Le coupleur (1000) selon l'une des revendications 1 à 3, comprenant en outre un condensateur de résonance connecté en série ou en parallèle avec la bobine afin de former un circuit résonnant conçu pour la transmission de courant inductive par résonance,
le coupleur (1000) étant de préférence un coupleur émetteur configuré pour recevoir un courant variant dans le temps provenant d'une source de courant qui lui est connectée, afin de générer un champ magnétique pour effectuer une transmission de courant sans fil avec un coupleur récepteur à travers un entrefer sur la base de l'induction magnétique, ou dans lequel le coupleur (1000) est de préférence un coupleur récepteur configuré pour interagir avec un champ magnétique généré par un coupleur émetteur afin d'induire un courant dans le coupleur récepteur qui alimente en énergie une charge électrique connectée au coupleur récepteur, afin d'effectuer un transfert d'énergie sans fil avec le coupleur émetteur par l'intermédiaire d'un entrefer sur la base de l'induction magnétique.

5. Un système de transmission d'énergie sans fil, comprenant :
un émetteur de courant sans fil comprenant :
une source de courant configurée pour générer un courant variant dans le temps ; et
un coupleur d'émission connecté à la source d'énergie, le coupleur d'émission étant configuré pour recevoir le courant variant dans le temps provenant de la source d'énergie afin de générer un champ magnétique pour effectuer une transmission d'énergie sans fil avec un coupleur de réception via un entrefer sur la base de l'induction magnétique ; et
un récepteur de courant sans fil, comprenant :
une charge électrique ; et
le coupleur récepteur connecté à la charge électrique, le coupleur récepteur étant configuré pour se coupler au champ magnétique généré par le coupleur émetteur afin d'induire un courant dans le coupleur récepteur pour alimenter en énergie la charge électrique connectée au coupleur récepteur, afin d'effectuer une transmission de courant sans fil avec le coupleur émetteur à travers l'entrefer sur la base de l'induction magnétique,
dans lequel au moins l'un parmi le coupleur récepteur et le coupleur émetteur est un coupleur (1000) selon l'une des revendications 1 à 3, et l'émetteur de courant sans fil et le récepteur de courant sans fil sont séparés l'un de l'autre par l'entrefer.

6. Le système selon la revendication 5, dans lequel le coupleur récepteur et le coupleur émetteur sont chacun un coupleur (1000) selon l'une des revendications 1 à 3, ou dans lequel soit le coupleur récepteur, soit le coupleur émetteur est un coupleur (1000) selon l'une des revendications 1 à 3 et l'autre des coupleurs récepteur et émetteur est un coupleur configuré de manière à présenter une configuration unipolaire.

7. Un procédé de fabrication d'un coupleur (404, 1200) pour la transmission sans fil d'énergie, le procédé comprenant une pluralité de sections de bobine, la pluralité de sections de bobine comprenant une première partie de bobine et une deuxième partie de bobine qui sont enroulées dans des directions opposées, dans lequel la première partie de bobine est intégrée dans la deuxième partie de bobine et définit une première zone,
la deuxième partie de bobine comprend une pluralité de deuxièmes boucles d'enroulement et définit une deuxième zone ;
la première partie de bobine et la deuxième partie de bobine sont configurées de telle sorte que le flux magnétique généré sur la base de la première partie de bobine circule à travers la première zone et dans la deuxième zone ;
**caractérisée en ce que**
chacune des multiples boucles de deuxième enroulement est une boucle d'enroulement complète ;
la première partie de bobine comprend plus d'une première boucle d'enroulement et les multiples deuxièmes boucles d'enroulement sont enroulées dans une direction opposée à celle de plus d'une des premières boucles d'enroulement ;
la première partie de bobine formant un flux magnétique pour le transfert d'énergie et la deuxième partie de bobine formant une zone fermée pour la formation d'un flux magnétique comprenant une dispersion magnétique ;
une première partie de bobine à sens inverse (416, 1212) est formée par la première partie de bobine (408, 1216) et la deuxième partie de bobine (412, 1214) ; et la bobine comprend en outre une ou plusieurs parties de bobine à sens inverse supplémentaires ; dans laquelle la partie de bobine à sens inverse supplémentaire (516, 1202) comprend une troisième partie de bobine (508, 1206) et une quatrième partie de bobine (512, 1204), la troisième partie de bobine étant intégrée dans la quatrième partie de bobine ;
la première partie de bobine à sens inverse (416, 1212) est imbriquée dans une ou plusieurs des parties de bobine supplémentaires à sens inverse (516, 1202) ; la bobine est formée comme un enroulement continu ;
la première partie de bobine est enroulée dans le sens des aiguilles d'une montre et la deuxième partie de bobine est enroulée dans le sens inverse des aiguilles d'une montre, ou la deuxième partie de bobine est enroulée dans le sens des aiguilles d'une montre et la première partie de bobine est enroulée dans le sens inverse des aiguilles d'une montre.

8. Le procédé selon la revendication 7, dans lequel la bobine est configurée de manière à présenter une configuration en spirale plane,
dans lequel, de préférence, la première partie de bobine (1008) et la deuxième partie de bobine (1012) sont chacune conçues de manière à présenter une configuration de bobine unipolaire, et la bobine présente une configuration de bobine multipolaire.

9. Le procédé selon l'une des revendications 7 à 8, dans lequel la bobine forme une première cellule de bobine et le procédé comprend en outre la formation d'une ou plusieurs cellules de bobine supplémentaires reliées à la première cellule de bobine, chacune des cellules de bobine supplémentaires comprenant une deuxième bobine conçue pour le transfert d'énergie sans fil par induction magnétique, la deuxième bobine comprenant une pluralité de parties de bobine, dont une cinquième partie de bobine et une sixième partie de bobine, qui sont enroulées dans des directions opposées, la cinquième partie de bobine étant intégrée dans la sixième partie de bobine.

10. Le procédé selon l'une des revendications 7 à 9, comprenant en outre la mise en place d'un condensateur de résonance ( ) connecté en série ou en parallèle avec la bobine afin de former un circuit résonnant conçu pour la transmission inductive de courant par résonance,
dans lequel, de préférence, le coupleur (1000) est un coupleur émetteur configuré pour recevoir un courant variant dans le temps provenant d'une source de courant qui lui est connectée, afin de générer un champ magnétique pour effectuer une transmission de courant sans fil avec un coupleur récepteur à travers un entrefer sur la base de l'induction magnétique, ou
dans lequel le coupleur (1000) est de préférence un coupleur récepteur configuré pour interagir avec un champ magnétique généré par un coupleur émetteur afin d'induire un courant dans le coupleur récepteur qui alimente en énergie une charge électrique connectée au coupleur récepteur, afin d'effectuer un transfert d'énergie sans fil avec le coupleur émetteur par l'intermédiaire d'un entrefer sur la base de l'induction magnétique.

11. Le procédé de transmission sans fil d'énergie, comprenant :
la génération d'un courant variant dans le temps par une source de courant au niveau d'un émetteur de courant sans fil ; et
la réception du courant variant dans le temps provenant de la source de courant par un coupleur émetteur au niveau de l'émetteur de courant sans fil, qui est connecté à la source de courant, afin de générer un champ magnétique pour effectuer une transmission de courant sans fil avec un coupleur récepteur via un entrefer sur la base de l'induction magnétique ;
coupler un champ magnétique généré par le coupleur émetteur via le coupleur récepteur au niveau d'un récepteur de courant sans fil, qui est connecté à une charge électrique, afin d'induire un courant dans le coupleur récepteur pour effectuer un transfert de courant sans fil avec le coupleur émetteur à travers l'entrefer sur la base de l'induction magnétique ; et
fournir de l'énergie par le coupleur récepteur au récepteur de courant sans fil vers la charge électrique qui y est connectée sur la base du courant induit dans celui-ci, dans lequel au moins l'un parmi le coupleur récepteur et le coupleur émetteur est un coupleur (1000) selon l'une des revendications 1 à 4, et l'émetteur de courant sans fil et le récepteur de courant sans fil sont séparés l'un de l'autre par l'entrefer.
